# EUROPEAN PATENT SPECIFICATION

(11) **EP 4 131 193 B1**
(45) Date of publication and mention of the grant of the patent: **21.05.2025**
(21) Application number: 21190182.2
(22) Date of filing: 06.08.2021
(51) Int. Cl.: G08B 13/14, G08B 21/02, G06Q 10/08

(54) **CARGO MONITORING, TRACKING AND RECOVERY SYSTEM**
FRACHTÜBERWACHUNGS-, -VERFOLGUNGS- UND -WIEDERAUFFINDUNGSSYSTEM
SYSTÈME DE SURVEILLANCE, DE SUIVI ET DE RÉCUPÉRATION DE CHARGEMENT

(43) Date of publication of application: 08.02.2023
(73) Proprietor: Optio Technologies LLC, Saint Petersburg FL 33704 (US)
(72) Inventor: Duvall II, William R., White, GA 30184 (US)
(74) Representative: Paul & Albrecht Patentanwälte PartG mbB

(56) References cited:
- EP-A1- 2 747 004
- EP-A1- 3 416 127
- US-A1- 2006 181 413
- US-A1- 2009 124 304
- US-A1- 2009 160 646
- US-A1- 2019 027 069

## Description

The present invention relates to a cargo monitoring, tracking and recovery system. The invention furthermore relates to a cargo location device.

The transportation of cargo brings along many risks, among others the risk of cargo items being lost or stolen. Therefore, especially if valuable and/or safety-relevant cargo is handled, there is a need for security measures to ensure safe and reliable cargo transportation by land, sea or air.

Examples of valuable cargo are expensive items like cars or the like. Safety-relevant cargo can for example be chemical, biological, radiological, nuclear, and/or explosive (CBRNE) cargo. In 2019, the global CBRNE security market size was USD 9393.2 million and it is expected to reach USD 11360.1 million by the end of 2026, with a CAGR of 2.7% during the forecast period 2021-2026. The transportation of dangerous and hazardous CBRNE cargo by government and private agencies brings many risks. If such cargo is lost or stolen, it can be used by malevolent actors or terrorists to cause great damage and loss of life.

One possibility to improve security during transportation of valuable and/or security-relevant cargo is to hire security personnel, to guard the cargo during transportation. To provide a high level of security, the personnel must be specifically trained and armed and must stay with the cargo during the entire transportation process. This approach is therefore very expensive and impractical.

An alternative to hiring security personnel is to use technical equipment to improve security. It is known from the state of the art to utilize monitoring systems using GPS, GSM or satellite techniques to observe cargo during transportation. In US 8,078,139 B2 for example, a cargo monitoring system is disclosed, which facilitates the monitoring of shipping containers in which cargo items are transported. The system comprises a number of wireless communication gateways that are each joined with a shipping container to be monitored. The gateways are in short-range wireless communication with a number of communication devices, each being associated with a piece of cargo positioned within the container. The communication between the gateways and the communication devices takes place using radio frequency signals. The gateways are then in long distance communication with a server based monitoring application, embodied by a network server, via a wide area network. The gateways for example can communicate with the server based application via Wireless LAN (wireless local area network), Bluetooth, mobile-phone, satellite or other long range wireless communication capabilities.

The monitoring system disclosed in US 8,078,139 B2 has proven to be useful for the observation of the location and status of the shipping containers and the cargo transported therewith. Nevertheless, if a cargo item, for example a CBRNE cargo item, is removed from the shipping container, for example due to theft, the item can no longer be observed or tracked with the system disclosed. The CBRNE cargo therefore will be lost and a significant risk created for malevolent actors or terrorists to cause tremendous damage to infrastructure and loss of life.

WO 2014/096413 A1 discloses a cargo monitoring and tracking system. The system comprises cargo location devices configured to be disposed at, especially hidden in a cargo item or a group of cargo items, cargo supervising devices configured to be disposed at a transport means for the cargo items and (central) cargo control means. The cargo location devices are configured to be operated in a monitoring mode in which they wirelessly transmit a monitoring signal adapted to be received by a respective cargo supervising device and a tracking mode in which they wirelessly transmit a tracking signal which is traceable by tracking means. They are furthermore configured to automatically switch from monitoring mode to tracking mode. The system therefore allows on one hand the monitoring of one or more cargo item(s) during transportation with a transport means, such as a car, truck, train, ship or other. On the other hand, in case a cargo item or a group of cargo items is lost or stolen, the system allows for the tracking of the stolen asset(s).

Nevertheless, it has turned out that the system disclosed in WO 2014/096413 A1 is not completely fail-safe and can be overcome by criminals. In particular, it has shown that stolen cargo items can not always be tracked. Especially regarding CBRNE cargo, this is highly critical. Also, while the systems currently used are able to track the containers or transport vehicles that transport the cargo, they do not reliably track the cargo itself once it is removed. This has resulted in cases where CBRN materials have gone missing and have not been recovered.

US 2006/0181413 A1 discloses a security system for monitoring at least one shipping container being transported by at least one cargo transport vehicle. The system comprises a container security device removably coupled to the at least one shipping container including at least one anti tamper sensor, a micro controller and a communication device.

It is therefore an object of the present invention to provide a system comprising at least one cargo location device (CLD), which facilitates improved security means for cargo transportation, tracking and recovery procedures. In particular, it is an object of the present invention to provide an improved system comprising at least one cargo location device (CLD) that reliably allows for the tracking and recovery of cargo to ensure safe and reliable transportation.

The invention is defined by claim 1 and relates to a cargo location device (CLD), configured to be disposed at, especially hidden in a cargo item or a group of cargo items, the cargo location device comprising means for wirelessly transmitting and receiving signals, a central processing unit and at least one energy source, and being configured to be operated in a monitoring mode in which it transmits a monitoring signal, which is receivable by monitoring means and a tracking mode in which it transmits a tracking signal which is traceable by tracking means, wherein the means for wirelessly transmitting and receiving the signals comprise a GSM module and a LPWAN module and a GPS module and a radio module, preferably a VHF radio module, and wherein the cargo location device is configured to switch from monitoring mode to tracking mode in response to receiving a tracking activation message that can be sent via a GSM network, a LPWAN and a radio network, preferably a VHF radio network. The cargo location device is configured such that the GPS module intermittently provides coordinates, in particular LAT/LONG coordinates, at least when the cargo location device is in tracking mode, and in that it transmits the coordinates provided by the GPS module.

According to the present invention, the object of providing an improved system comprising at least one cargo location device (CLD) that reliably allows for the tracking and recovery of cargo to ensure safe and reliable transportation is solved by a cargo monitoring, tracking and recovery system, comprising:
- at least one cargo location device (CLD)according to claim 1,
- at least one cargo supervising device (CSD), configured to be disposed at a transport means for the cargo items, comprising means for wirelessly transmitting signals to and wirelessly receiving signals from the at least one cargo location device and at least one energy source, and
- cargo control means (CCM), comprising means for wirelessly sending data to and wirelessly receiving data from the at least one cargo supervising device and a database, the cargo control means being configured to store data, especially data that has been sent to or received from the at least one cargo supervising device, in the data base,
wherein the at least one cargo location device is configured to be operated in a monitoring mode in which it wirelessly transmits a monitoring signal adapted to be received by the at least one cargo supervising device and a tracking mode in which it wirelessly transmits a tracking signal which is traceable by tracking means, and wherein the at least one cargo location device is configured to switch from monitoring mode to tracking mode in response to receiving a tracking activation message that is sent via at least one of a GSM network, a LPWA network and a radio, preferably a VHF radio network, in particular by the cargo control means.

According to another preferred embodiment the at least one cargo location device is configured to intermittently send check signals to the at least one cargo supervising device in monitoring mode and the at least one cargo supervising device is configured to intermittently send acknowledge signals to the at least one cargo location device in response to the check signals, wherein the at least one cargo location device is configured to switch from monitoring mode to tracking mode when it does not receive an acknowledge signal in predefined time period after sending a check signal. This ensures that a constant communication between the CSD and the (respective) CLD is maintained. If more than one CLD is provided, each CLD preferably transmits a unique check message, which can for example contain the unique serial number of the CLD, to be able to identify the respective CLD and therefore the specific cargo item, in which the CLD is hidden. Besides from a unique serial number, the check message of the CLD can further comprise data about the current RSSI-value of the CSD, which has been determined by the CLD.

Furthermore, at least one wireless alarm device, which is configured to be joined to the transport means for the cargo items can be provided, the at least one wireless alarm device comprising at least one energy source and means for transmitting alarm signals to the at least one cargo location device and being adapted to be manually activated by a user, wherein the at least one wireless alarm device is configured to send an alarm signal to the at least one cargo location device in response to being manually activated by a user, and wherein the at least one cargo location device is configured to switch from monitoring mode to tracking mode in response to receiving an alarm signal from the at least one wireless alarm device. The wireless alarm device is also referred to as a "panic button" (PB). The at least one PB is an autonomous, self-powered, in particular ruggedized device that can be positioned in close proximity to the cargo to be monitored, especially within the transport means. If a truck is used as transport means, the at least one PB will preferably be positioned inside the truck's cargo hold, for example on the inner wall of the cargo hold, or in the cabin of the truck. The at least one PB allows a user, for example the truck driver or a person escorting the cargo, to manually activate an alarm mode in an emergency situation. The PB therefore preferably comprises a button to be pressed by the user. When the alarm mechanism is activated, i.e. the button is pressed, a signal will be wirelessly transmitted from the PB to the CSD joined to the transport means. The CSD will in response to the signal deliver an emergency alert to the CCC which can take further action. The CSD preferably is adapted for a two-way communication with the at least one PB. One or more PB(s) can be positioned within the transport means. Each PB has - in analogy to the CLDs - a unique serial number for identification. The CSD will be remotely programmed with serial numbers of the PB that are to be used during cargo transit. The radio frequency communication of PB and the CSD preferably works in the same channel as the CLDs.

The system according to the present invention allows on one hand the monitoring of one or more cargo item(s) during transportation with a transport means, such as a car, truck, train, ship or other and on the other hand in case a cargo item or a group of cargo items is stolen, the system allows for the tracking and recovery of the stolen asset(s). The cargo items to be monitored, tracked and recovered with the system according to the present invention can for example be CBNRE cargos, but can also be any cargo of interest, especially valuable items for example cars or jewelry, electronic items, such as computers, TV sets, mobile phones, food, cigarettes, high value electronic components such as processors or pharmaceuticals.

The present invention facilitates a high level of reliability since it is designed in a redundant manner. In particular, there are different, redundant ways to activate the tracking mode of the cargo location device(s). According to the invention, this is achieved by sending a corresponding tracking activation message to the (respective) cargo location device, wherein different communication channels can be used for the message namely a GSM network and/or a LPWA network and/or a radio network, for example a VHF radio network. For this purpose, the cargo location device(s) comprise means for wirelessly transmitting and receiving radio signals with a GSM module, a LPWAN module and a radio module. The modules can be implemented in software or in hardware or in a combination of software and hardware.

GSM stands for Global System for Mobile Communications, LPWA stands for Low-Power Wide-Area and VHF stands for Very High Frequency. The abbreviation LPWAN is also common for LPWA networks. Examples for LPWA networks are Sigfox, LoRaAlliance, NB-loT and LTE-M.

LPWA networks for example have a bit range of 0,3 to 50 kbit/s. VHF networks can for example have a frequency range of 30 to 300 MHz. VHF networks that are used within the framework of the present invention preferably have a frequency range of 150 to 174 MHz.

The system according to the present invention is a modular system that comprises a number of components. It is in general divided into two main sections. One section comprising the components that always travel along with the cargo, comprising the at least one cargo location device, configured to be disposed at the cargo item(s) and the at least one cargo supervising device, which is disposed at the transport means. The other section, which comprises the cargo control means, does not travel along with the cargo but might be located far away from it and will be in wide range communication with the components travelling along with the cargo, at least with the CLD(s) and CSD. The CCM preferably comprise a cargo control center (CCC), configured to control the at least one CSD and a cargo management server (CMS), configured to keep data bases with information about the at least one CSD, the at least one CLD and about date, time and position. The CCC and the CMS can be located in the same place or can be spatially separated.

At the least, the system according to the present invention comprises the CCM, one CSD and one CLD. If only one CSD and CLD is provided, this will be sufficient to monitor one transport means and one piece of cargo or one group of bundled cargo pieces positioned in the transport means. Since usually not only one cargo item or bundle of cargo items has to be monitored, it is preferred that not only one but a number of CLDs is provided, in particular one CLD for each cargo item or bundle of cargo items respectively.

Furthermore, there can be more than one CSD in the system according the present invention. When for example more than one transport means is used for cargo transportation, each transport means is preferably equipped with its own CSD. This might be the case when a number of cargo items belonging together are for example transported with a convoy of trucks. The CLDs that are hidden within the cargo pieces positioned in each truck are then preferably assigned to the CSD which is joined to the respective truck and the CSD will preferably only be in communication with the CLDs that are assigned to it. If alternatively a ship is used for transportation, there can also be provided more than one CSD, because on a ship it is common to transport/store cargo items within many shipping containers. A CSD can then be provided for each shipping container. In the same manner if a train is used for cargo transport there can be provided a CSD for each railway car.

On the other hand the system according to the present invention might comprise many CSDs as well as many CLDs to allow for the system to simultaneously monitor the cargo transportation procedure of many customers (which can be for example a government agency, or branch of the military, a cargo shipping company, an insurance company, or a risk management company.). In this case each customer needs to use transport means that are equipped with one or more CSD(s) and a number of CLDs for his cargo items.

The CLD according to the present invention is an autonomous device, which might especially have the form of a box. It is configured to be disposed at a cargo item or a group of cargo items, in particular to be joined with the item(s). Preferably, the CLD is configured to be hidden in the cargo items, so it can not be detected by a potential thief.

The CLD has means for wirelessly transmitting and receiving signals, in particular to be able to communicate with the at least one CSD of the inventive system, a central processing unit for processing data, and at least one energy source, for example a battery, which might especially be rechargeable, which supplies the electrical energy for the operation of the CLD. The energy source is configured to be able to electrically supply the CLD during the whole duration of the cargo transportation procedure. This procedure can for example last several days, weeks or months. The CLD preferably is a half-duplex digital modulation radio frequency transceiver in the most simple configuration, but can be any other compatible wireless media.

Furthermore, the CLD is configured to be operated in a monitoring mode as well as a tracking mode, to allow on one hand the monitoring and on the other hand the tracking of cargo. The CLD therefore is configured to emit different kinds of wireless signals in the two modes.

In monitoring mode the CLD intermittently emits a "proof of life" check message to the CSD, which preferably contains a unique serial number of the CLD, a relative signal strength indicator (RSSI)-level, a radio frequency power set and an acknowledge alert message. Every time the CLD emits a "proof of life", the CSD will acknowledge back. The RSSI received level is maintained in a rolling average data table inside the CLD, and also transmitted in the next proof of life (POL). In the same way, the CSD will keep track of the RSSI received from every CLD POL signal. By this means, the system can determine automatically any change in proximity between the CSD and any particular CLD hidden in the cargo. The CLD subsequently waits for feedback, i.e. an acknowledge signal from the CSD, in return. When the CLD preferably is not sending a check message and not waiting for the CSD to respond, the CLD is sleeping to save energy of its internal energy source.

In tracking mode however, the CLD emits a signal intended to facilitate the tracking and recovery of the CLD. It particularly transmits a tracking message, which preferably also contains a unique serial number of the CLD and additionally a tail of zeroes, which extend the signal length for the tracking means. These zeroes are necessary for the receiving tracking means, to compute direction of the origin of the transmission, without disturbing the data section of the signal. Furthermore, in tracking mode the repetition rate of the tracking signals emitted by the CLD as well as the signal strength will preferably be higher than in monitoring mode.

Due to the transmission of the tracking signal, which is traceable by tracking means, the tracking of a lost or stolen cargo item is possible even if the cargo item and therefore the CLD hidden therein is far away from the CSD, which usually is the case when a piece of cargo is stolen and the thief is on the run.

The CLD is furthermore configured to be able to automatically switch itself from monitoring mode to tracking mode. This will happen in response to a certain events. Due to this it is ensured, that the tracking mode is activated in case of theft, without the CLD being dependent on any other device.

It has proven as particularly preferably to have five means to activate the tracking mode of the CLDs, namely by an activation command transmission from a radio, for example VHF network, by an activation command transmission from a GSM network, by an activation transmission from a proprietary Low Power Wide Area Network (LPWAN) such as Sigfox, when a cargo supervising device has not responded to a check signal from the CLD, or as a result of a panic button (PB) being employed. In particular, the CSD regularly sends CHECKn messages to the CLD(s). If the CSD gets no ACKN message back from one or more CLDs, it will assume that the (respective) CLD has been removed, in particular stolen, and preferably will alert the CMS. Also, if the CLD can not "hear", in other words does not receive regularly scheduled CHECKn messages, it can assume it has been removed and self activate. The tracking mode activation options via radio, for example VHF network, GSM network and LPWAN are an insurance that a removed CLD indeed is activated. Redundant means allow the system to be more robust and offer defense against jamming and dithering of transmissions.

The CSD furthermore preferably can communicate to the CCM via GSM, LPWAN and via Bluetooth in particular through the cloud.

The purpose of the CSD preferably is to monitor the status of the CLD(s) and to report, on a schedule, the status to the CMS of the CCM, and also to regularly send CHECKN and receive ACKn messages from the CLD(s), as described above.

Preferably, the CLD's tracking mode can be activated by the cargo control means (CCM), in particular a cargo control center (CCC) of the cargo control means, via GSM, LPWAN and/or radio, in particular VHF. The CCM, in particular CCC, can be embodied and/or configured accordingly. In other words, the CCM, in particular CCC, preferably controls the CLD(s) for activation of the tracking signal transmission.

According to another preferred embodiment of the invention, the at least one cargo location device is configured to switch from tracking mode to monitoring mode in response to receiving a tracking deactivation message that is sent via at least one of a GSM network, a LPWAN and a radio, preferably a VHF radio network, in particular by the cargo control means. In other words, according to this embodiment, the tracking mode of cargo location devices can not only be activated but also deactivated by receiving corresponding messages.

Preferably, the CLD's tracking mode can be deactivated by the CCM, in particular CCC, via GSM, LPWAN and/or radio, in particular VHF. The CCM, in particular CCC can be embodied and/or configured accordingly. In other words, the CCM, in particular CCC, preferably controls the CLD(s) for a deactivation of the tracking signal transmission.

For sending/forwarding/broadcasting transmissions in particular from the CCC to the (respective) CLD for activation and/or deactivation of the CLD's tracking mode, means that are also used for the tracking process, for example stationary tracking means like a network of corresponding towers that are able to send transmissions via GSM and/or LPWAN, such as Sigfox or similar, and/or radio, in particular VHF, can be used. In this case, the tracking means might also be called tracking and activation/deactivation means.

Preferably, the cargo control means (CCM), in particular a cargo control center (CCC) of the cargo control means, are configured to send tracking activation messages and/or tracking deactivation messages to the at least one cargo location device that comprise a unique activation code (AC) of the at least one cargo location device. These messages again can be sent or forwarded to the CLD(s) using, means that are also used for the tracking process, for example stationary tracking means like a network of corresponding towers that are able to send transmissions via GSM and/or LPWAN, such as Sigfox or similar, and/or radio, in particular VHF.

The activation code preferably is a unique code programmed in particular into the CPU of each CLD when manufactured and that preferably is kept secret.

Alternatively or in addition to the tracking deactivation messages comprising a unique activation code they can comprise a unique serial number of the at least one cargo location device.

The CLD preferably is configured to receive transmissions from the CCM, in particular CCC, which preferably will be messages containing an activation code (AC) that corresponds to the serial number of the CLD to be addressed, which transmissions are able to activate the specific CLD, causing the CLD to switch from monitoring mode to tracking mode. According to the invention, such transmissions from the CCM, in particular CCC, can be transmitted utilizing either the GSM network, a LPWAN, such as Sigfox or similar, or from the radio network, usually a VHF network specifically licensed for such transmission, or other radio networks as may be made available for this purpose. Furthermore, the CLD preferably is configured to receive transmissions from the CCM, preferably CCC, utilizing the aforeto mentioned networks that can cause the CLD to cease transmitting a tracking signal and to "reset" to monitoring mode, in other words to be deactivated. Therefore, the CLD benefits from redundant means for activation (and deactivation), namely, either by proximity sensing, or by a GSM network, or by a radio network, thereby providing a secure and robust means for activation.

The purpose of the serial number of the (respective) CLD in particular is to keep track of the CLD's activation and tracking codes (TC) until the CLD is installed to the material being protected. Once installed, the serial number of the CLD and the serial number of the material being protected preferably are sent to the CCM where the activation and tracking codes corresponding to the CLD serial number are extracted and "married" to the serial number of the material being tracked. When the material is reported lost or stolen, the CCM can look up the activation code corresponding to the material. Likewise, when tracking means receives a tracking code being transmitted by a lost/stolen and activated CLD, the tracking means operator can query the CCM with the tracking code and the CCM can look up the material corresponding to that tracking code and provide a description of the material to the tracking means operator. The tracking means operator will then know what to look for and how to approach the material, as the material may be dangerous, such as radiological, explosive, biological, etc.

In a further preferred embodiment, the at least one CLD contains, in particular is programmed with, a number triplet comprised of a unique serial number, an activation code (AC), and a tracking code (TC). The number triplet preferably is produced by an algorithm at the point of manufacture. The serial number is visible on the exterior of the CLD itself and, if present, a packaging of the CLD. The activation code and tracking code are unique codes programmed in particular into the CPU of each CLD when manufactured and are kept secret. Each time a CLD or a group of CLDs are manufactured, the number triplets preferably are sent to the CCM where they are stored in a data base. When a CLD is attached to the material being transported, the serial number of the CLD and the description (serial number or other identifier) of the material are preferably joined and stored in a data-base at the CCM such that the serial number is used only to keep track of the unique activation and tracking codes until such time as the CLD has been deployed.

If the material being protected by a CLD is stolen or lost (and has not already self activated), the unique identifier of the material preferably is reported to the CCM, which retrieves the activation code (AC) corresponding to the material and transmits the AC in particular through all redundant means to insure activation of the CLD.

Once the CLD has received its unique AC, it transmits its unique tracking code (TC) which is received by CLS and CTS. The number triplet is designed to insure that the AC and TC can never be accessed by bad actors to control the process.

The CSD according to the present invention is provided for the monitoring and controlling of the at least one CLD. The CSD registers the CLDs. In analogy to the CLD, the CSD is also an autonomous device, which might especially have the form of a box. The CSD preferably will be positioned in close proximity to the cargo, in particular within or on the transport means for the cargo. As is the case with the CLD(s), the CSD preferably also contains redundant WAN communication devices, such as cellular modems, satellite communication systems, WiFi communication systems and the like, or the combination of the above. Preferably, the CSD comprises a LPWAN and/or a GSM module, so there can be redundant GSM, WAN, LPWAN and radio communication means, providing redundant means to communicate to and from the CSD. Like the CLD, the CSD comprises an independent energy source, for example a battery, which might especially be rechargeable. The energy source has sufficient power to sustain all supervision and communication/ reporting tasks during the whole cargo transportation procedure, especially over the period of time of a given long-haul transit cargo trip.

The CSD is configured on one hand to be in short range communication with the at least one CLD and on the other hand, to be in long range communication with the CCM. Therefore, the CSD comprises means for transmitting radio signals to and receiving radio signals from the at least one CLD. The means for transmitting and receiving radio signals are especially configured to allow a half-duplex two-way data communication in the radio frequency channel with the at least one CLD. The communication network implemented between the at least one CSD and the at least one CLD might also be referred to as the "Cargo RF LAN" (Cargo Radio Frequency Local Area Network). The supervision information about the at least one CLD which is collected by the at least one CSD will preferably be formatted in a small data packet along with position, date and time and be send to the CMS. All information about the cargo in transit and the status of the one or more CLD(s) hidden in the cargo will be transmitted back to the CMS. The data can also be used by the CCM to generate reports for customer service. In particular the time of transit, distance position and the like might be communicated to a customer to keep him up to date. A customer information system (CIS) can be used for this purpose.

On the other hand the CSD comprises means to send and receive information via a wide area network (WAN). This means are especially configured for communication between the CSD and the CCM. In a preferred embodiment the means to send and receive information are configured to allow full duplex data communication between the CSD and the CCM. Furthermore, such communication will utilize multiple transmission means in order to provide redundancy, such redundancy will provide enhanced security in the event that a single means of transmission may be disabled or "jammed" by bad actors.

The redundant transmission systems to be used may include communication systems and technologies such as GSM, GPRS, UMTS, Sigfox, LoRaAlliance, NB-loT and LTE-M, VHF radio network, and/or satellite might be used for the communication between the at least one CSD and the CCM, in particular the CCC. A long-range communication network might also be referred to as the "Cargo WAN" (Cargo Wide Area Network). Preferably, the CLS (stations) would receive communications from the CSD and forward them to the CMS via a cloud (internet) or GSM network. They can be embodied and/or configured accordingly.

Preferably, the CCM can communicate with the (respective) CLD via radio, in particular VHF radio.

The CSD is furthermore configured for remote programming of the at least one CLD, especially for remote programming of the serial number of the at least one CLD. This enables exclusive and unique supervision of the particular devices.

The at least one CLD and the at least one CSD are preferably ruggedized so that they can be installed in rough environments also. They preferably are for example at least configured waterproof, shock resistant, radiation proof and in are otherwise capable of surviving in a CBRNE environment.

The CCC is a 24/7 control center. It provides all of the monitoring tasks of the cargo in transit. The CCC in particular provides centralized control and status of all CSDs, provides means to activate CLDs and receives updated tracking information from the tracking means. It also provides coordination with customers and authorities. The CCC has full access to all commands to the CSDs and monitors the status of all CSDs.

The CMS is the backend and heart of the operation of the system according to the present invention. It is configured to send and receive all necessary information to and from the at least one CSD. The CMS keeps data bases of all CSDs, CLDs, position, time and date. It furthermore provides a mapping service for display of the CLD's positions to the CCC and the customer. The CLDs are registered within the CMS, which provides each CSD with a listing of all the CLDs to be monitored for a given shipment of cargo items, records all data received from the CSD including date, time, mapping, position and status and provides updated information to the CCC. For security and safety reasons, the CMS is preferably positioned at a safe location for data servers.

In general, one CCC and one CMS will be sufficient to monitor and control all CSDs and CLDs of the system according to the present invention, even if the cargo transport procedures of many customers are monitored simultaneously. Alternatively, the system according to the present invention might comprise more than one CCC and CMS, for example one CCC and one CMS in each country, in which the system is implemented.

According to one embodiment of the present invention, the at least one CLD comprises means for determining its spatial distance to the CSD and is configured to switch from monitoring mode to tracking mode when a given value of spatial distance, in particular a minimum of RSSI, is exceeded and/or when a current value of spatial distance is changed. Therefore, in this embodiment the event that triggers the CLD to automatically switch itself from monitoring mode to tracking mode is the exceeding of a maximal spatial distance between the CLD and the CSD. The given value of distance might for example be chosen corresponding to the dimensions of the transport means, in which the cargo is positioned, for example a truck, so that the tracking mode is activated, as soon as a piece of cargo, in which a CLD is hidden, will be removed from the transport means, i.e. the truck. The current distance value between the CLD and the CSD can for example be determined by the CLD by measuring the signal strength of the radio signals transmitted from the CSD to the CLD. The signal strength can be expressed as an RSSI-value (received signal strength indication value). The central processing unit (CPU) of the CLD will in a preferred embodiment, based on a specific algorithm, continuously calculate the changes in RSSI-value from the CSD to monitor the CLD's current proximity to the CSD. The tracking mode can then be activated alternatively or in addition, whenever a change in proximity, i.e. a change that exceeds a maximum change-value is registered.

Furthermore, the at least one CLD can be configured to switch from monitoring mode to tracking mode when a radio signal transmission from the at least one CSD to the at least one CLD ends. The transmission from the CSD can for example be ended intentionally, to activate the tracking mode of the CLD. Also, if the CSD is destroyed, possibly by a thief who stole a cargo item, the transmission of signals will end and the CLD will switch to tracking mode.

According to another preferred embodiment of the present invention, the means for wirelessly transmitting and receiving signals of the at least one CLD comprise a radio chip, which is configured to generate modulated radio signals and to demodulate radio signals and/or at least one antenna and/or a power amplifier. The radio chip of the CLD is in charge of generating modulated radio frequency signals to be transmitted from the CLD and of demodulating signals that are received by the CLD. Data sent or received by the radio chip will be exchanged with the CPU of the CLD, which is in charge of data analysis of the radio signals received, especially in charge of determining the current distance to the CSD from the signal strength of the radio signals sent by the CSD. The antenna is - in a manner known per se - provided for emitting and receiving radio signals. The antenna might be a radio frequency pigtail. The length of the antenna depends on the particular frequency that is used for communication between the CLD, the CSD and the tracking means. Furthermore, in a known manner, too, the power amplifier allows for the transmission of radio frequency signals.

It is further preferred that the energy source of the at least one CLD comprises a primary battery, a transmit battery and a battery power management system. The primary battery preferably is for the operation of the CPU and the radio chip of the CLD. It is a long time, low current battery. Furthermore, since the power drain for the operation of the radio frequency power amplifier is comparably high, a transmit battery especially dedicated to the radio frequency power amplifier is provided according to this embodiment. Both, the transmit and the primary battery can be either rechargeable or non-rechargeable batteries depending on the operation parameters desired. The power battery management system is for control of power consumption from the two batteries.

It is further preferred that the at least one CLD comprises a GSM radio modem configured to be registered to a cellular network. This embodiment allows a cellular network to determine the position of a CLD equipped with a GSM modem. In a manner known per se this is usually possible with a precision of at least up to one cell of the cellular network. In monitoring mode this embodiment can provide redundancy, because not only the position of the CSD will be determined, but also the position of a CLD via cellular net. Therefore, the GSM modem will be registered to a cellular network during transit of the cargo. Furthermore, cellular networks offer LPWAN options such as LTE-M and NB-loT, which dramatically reduce power consumption while providing enhanced redundant tracking capability. In tracking mode this embodiment allows for the CLD being traceable not only by tracking means, which are especially installed for a tracking purpose, but also by an existing cellular network. Cellular networks are widely implemented nearly all over the world and can - according to this embodiment - be used to support the tracking procedure. After the cell has been identified, in which a stolen cargo item equipped with a CLD comprising a GSM radio modem is hidden, it can be located in a more precise manner with the tracking means that are listening to the CLD's specific tracking signal.

Preferably, CLDs are able to be tracked by several means. It is especially preferred if they can be tracked by four means, namely by a radio, in particular VHF network, by mobile radio, in particular mobile VHF trackers, by a GSM tower network that preferably can receive tracking transmissions from CLDs that contain GPS Lat/Long, and by a proprietary LPWAN that preferably provides location information utilizing Internet of Things (IoT) techniques, such as Sigfox. Such redundancy improves the likelihood of successful recovery of a stolen or missing CLD. It allows more robustness and offers defense against jamming and dithering of transmissions.

According to another embodiment the cargo location device is configured such that the GPS module intermittently provides coordinates, in particular LAT/LONG coordinates, at least when the cargo location device is in tracking mode, and in that it transmits the coordinates provided by the GPS module.

The CLDs each comprise a GPS module, which comprises or is embodied as a GPS receiver, so that tracking with GPS adds a further, preferably fifth tracking option. The GPS module can periodically provide coordinates, in particular LAT/LONG coordinates, which determine the geographical location of the CLD. The GPS module is embodied and/or configured accordingly. This provides further redundancy and accuracy for the tracking process of a lost CLD. GSM tower location is usually done by TDOA (Time Distance of Arrival) with three or more GSM towers, or at worst, a less accurate indication provided by a single GSM tower. A GPS module, in particular a GPS receiver provides further redundancy as well as accuracy for tracking. In particular, it allows that a GSM tower network and GPS provide the "target" area to system operators who can then direct mobile tracking stations, for example cars, aircraft etc., to the general area where a CLD is located and then use the VHF units to do final tracking and recovery of the CLD.

According to another embodiment of the invention, the at least one CSD comprises means for determining its spatial distance to the at least one CLD and is configured to switch to an alert mode when a given value of spatial distance is exceeded and/or when a current value of spatial distance is changed. In analogy to an aforementioned specific embodiment of the CLD being able to determine spatial distance to the CSD, the CSD also can be configured to monitor its proximity to the CLD and to automatically activate an alert mode, when its distance to CLD has exceeded a given value, or in general, has changed. When the alert mode is activated, preferably also the tracking mode of the at least one CLD(s) is activated.

The at least one CSD can furthermore be configured to communicate with a number of CLDs which are assigned to the at least one CSD. As mentioned above, usually, a number of cargo items will be transported within a transport means. Then preferably a number of CLDs, in particular one CLD for each piece of cargo or one CLD for each (small) group of cargo pieces will be used. It is particularly advantageous if one CLD is hidden within each piece of cargo, because then each piece can individually be identified, monitored, tracked and recovered, if stolen. On the other hand it is more economical to group a number of cargo pieces and assign a CLD to the group. It will depend on the kind of cargo to be monitored and tracked, which alternative is better. If for example individual containers of CBRNE materials are transported, each container should be equipped with a CLD.

In case a number of CLDs is provided within the transport means in which the cargo items are positioned, the number of CLDs will be assigned to one CSD, which is joined to the transport means. The assignment of CLDs might be implemented via the use of unique serial numbers as mentioned above. The CSD can for example program the (identically constructed) CLDs by assigning a unique serial number to each of the CLDs, or each CLD has a fixed unique serial number stored and the CSD gets a list of serial numbers, which are assigned, to it.

If the at least one CSD is configured to communicate with a number of CLDs that are assigned to it, and check and acknowledge messages are exchanged between the CSD and the CLDs, the CSD is preferably configured to allocate specific time slots for the transmission of the check radio signals to each of the number of CLDs, the time slots for different CLDs especially not being in overlap with each other. According to this embodiment, the cargo RF LAN (small network of CLDs and CSD) can be synchronized. Therefore a time mark of the internal cycle of supervision is transmitted from the CSD to each CLD assigned to the CSD, which in particular are on a list stored on the CSD. Based on the time mark sent to each CLD by the CSD, each CLD will set its internal clock so that the next (proof-of-life) check message transmitted by the CLDs will be synchronized with the CSD. The CSD in particular assigns non-overlapping time slots to the CLDs, which are assigned to it, so that the CLDs do not transmit simultaneously, but in a staggered manner. This avoids failures that might occur due to interference effects. The synchronization also allows a low power consumption of the CLDs, since they will be sleeping, i.e. all internal circuits of the CLDs will be turned off, between the specific time slot allocated to each CLD, in which the check message is transmitted.

It is further preferred, that at least one display means (DM) for displaying data to a user is provided, in particular to a driver of the transport means for the cargo, which is configured to be disposed at a transport means, the at least one display means comprising means for transmitting radio signals to and receiving radio signals from the at least one CSD. The DM enables the control as well as health checks of the system. The DM is in wireless communication with the CSD to exchange data and to provide text messaging between the driver and the CCC or customer. The DM can for example provide an optical alarm signal, whenever a CLD switches from monitoring to tracking mode to inform the driver or another person escorting the cargo about cargo being stolen or lost. Additionally it can be displayed on the DM whenever a wireless alarm device is triggered. In this way, the driver of a truck for example can be informed when a person in the back triggered the wireless alarm device. The DM preferably is positioned in the transport means in such a way, that the driver of the transport means or another person can conveniently watch the DM. When the cargo is transported via truck, it is preferably installed in the cabin of the truck.

According to another preferred embodiment, the at least one CSD comprises at least one GPS receiver and/or at least one GSM module and/or at least one Bluetooth module and/or at least one antenna and/or at least one serial hub controller. The GPS receiver allows the CSD to determine location information, speed, time and date at any time during the cargo transport procedure. According to a preferred embodiment, two GPS receivers are provided in order to increase GPS information availability and reliability. The GSM module is a module for GPRS data communication over the cellular footprint with the CMS of the CCM. Also two GSM modules with two different carriers can preferably be provided in order to increase data communication reliability. If display means (DM) are provided, the CSD can for example wirelessly communicate with the DM via the Bluetooth module.

According to yet another embodiment, the at least one CSD might comprise a RF CLD supervisor unit with a radio chip, a radio power amplifier and a central processing unit. The structure of the RF CLD supervisor unit in general corresponds to that of a single CLD, but has different internal programming. There is a radio chip and power amplifier for the link with the at least one CLD. The RF CLD supervisor unit is always monitoring the CLD-channel, in particular the VHF channel, in order to listen to the check messages (with proof of life rate) from the at least one CLD. In Particular, a list of a number of CLDs that have to be monitored during a specific cargo transport trip is sent from the CCC. The list is delivered from the CCC through the GSM-GPRS network to the CSD and internally from the GSM module to the RF CLD supervisor unit, passing through a serial hub controller that is provided within the CSD. Due to the list the RF CLD supervisor unit will know, what specific CLDs are going to be acknowledged. Once the RF CLD supervisor unit of the CSD receives and decodes a signal from any CLD, if the serial number of the CLD is not on the list, the RF CLD supervisor unit will not respond with an acknowledge signal.

The serial hub controller of the CSD is in charge of internal serial communications between the GSM modules, the RF CLD supervisor unit and the DM.

It is further preferred, that the CCM are configured to send information to and receive information from a customer via a software based, especially web based, customer information system. The customer information system (CIS) might comprise a group of software applications that are preferably loaded in the CMS of the CCM, in order to give the customer appropriate resources to deliver shipment registration notifications, ask for special commands to the CCC, monitor the cargo in transit, finish cargo transportation trips, etc. The applications are preferably secure web based applications. The CIS will be provided with updated information in real time by the CMS. With proper security authentication customers can via the CIS or via phone call also ask the CCC to deliver commands to the CSDs. They can also activate and deactivate CLDs via commands over the CIS, which are received by the CCC. This is especially useful if the customer wants to set up trips of cargo transportation on his own.

According to a further embodiment tracking means, especially stationary and/or mobile tracking devices are provided, which are configured to trace a tracking radio signal transmitted by the at least one CLD in tracking mode. The tracking means are network components that are deployed on the field in order to ensure automatic location and tracking of the CLDs. The tracking means preferably comprise fixed units, for examples towers which are configured to receive the tracking signals from the CLDs, wherein the towers are forming a net over a given spatial region, as well as mobile units, for example cars, and/or airborne units, for example planes or helicopters or drones, equipped with devices that can receive the tracking signals of the CLDs. The fixed units of the tracking means are also referred to as the cargo listening stations (CLS) and the mobile units as the cargo tracking stations (CTS). The tracking means listen to the periodic messages that are transmitted from the CLDs by monitoring the CLDs channel. They decode all messages from the CLDs and report all relevant information (serial number, position, date, time and RSSI-value) to the CMS. Furthermore, the CCC receives updated tracking information from the CLSs and the CTSs. The CCC then has real time information about position and can easily coordinate the CTSs for final tracking, location, and recovery. In order to be able to monitor the cargo in transit in real time, it is necessary to deploy a network of tracking means with a wide geographical coverage.

The tracking means preferably comprise a radio frequency direction finding unit, which is configured to determine the bearing angle of the tracking signal transmitted from the at least one CLD in tracking mode, especially by application of a Doppler shift based radio frequency direction finding technology. The radio frequency direction finding unit - in a manner known per se - comprises four or eight omni-directional antennas that are arranged in a circular pattern. The antennas are connected to an RF combining or a so called "summer" circuit, which allows the signals of the antennas to be combined in a way that simulates a continuous rotation of the circular antenna array about its axis of symmetry. The "rotating" antennas then relatively "move" with respect to the transmission source of the radio signal and the Doppler-effect can be used to determine the bearing angle of the transmission source in a manner known to the person skilled in the art. The unit also determines the RSSI signal strength of the radio signal which indicates the relative distance from the tracking unit to the CLD. Equipped like this, the tracking means can identify the direction from which a CLD, which is hidden in a stolen cargo item to be tracked, is transmitting, and the relative distance from the tracking unit to the CLD. Knowing the direction of origin, and the relative distance, moveable tracking means can be sent for final tracking and recovery of the cargo item.

The CLSs preferably can track the at least one CLD in tracking mode in different ways. In particular, the CLSs can track the at least on CLD via either one of a radio, in particular VHF network, via GSM or LPWAN. The CLSs, which preferably are a corresponding tower network, can be embodied and/or configured accordingly.

For secure storage of all the system's components which are to be joined with the cargo and/or transport means, i.e. the CSD, CLDs, the PBs and the DM during non-transport periods, there can be provided a "kit box", in which the components are stored while not in use. The "kit box" can according to a preferred embodiment comprise a deactivation mechanism, which automatically deactivates the CSDs and CLDs, PBs and DM as soon as they are positioned within it. This allows for an especially secure and energy saving handling of the components, which are usually managed by the user.

A further aspect of the present invention is a cargo location device, configured to be disposed at, especially hidden in a cargo item or a group of cargo items, the cargo location device comprising means for transmitting and receiving radio signals, a central processing unit and at least one energy source, and being configured to be operated in a monitoring mode in which it transmits a monitoring radio signal, which is receivable by monitoring means and a tracking mode in which it transmits a tracking radio signal which is traceable by tracking means and wherein the cargo location device is configured to automatically switch between the monitoring mode and the tracking mode.

For the monitoring of cargo items during their transportation, according to the present invention in particular each transport means will be equipped with a CSD, one or more PBs and at least one DM. Furthermore, one or more CLD(s) will be provided for monitoring and in the event of stolen cargo for tracking cargo items. The CLDs will be hidden within the cargo in the transport means.

Afterwards, the system, according to the present invention, will be set up for a given trip by the customer through the CIS, with a shipment notification to the CCC. The CCC acknowledges the notification by returning a "green light" to the customer and also to the driver of the transport means. Alternatively, the shipment notification could be driver originated to the CCC, which would also return a "green light". From this moment on, the CLDs will start to transmit their unique check messages to the CSD with a preset proof-of-life-rate and the CSD will acknowledge all check messages from the CLDs. Every time the CSD receives a check message from a CLD, it replies with an acknowledge message to the respective CLD, including not only the acknowledge itself, but also a time stamp of the clock of its internal system and the serial number assigned to that particular CLD. The CLD then has enough information, to synchronize its own check message transmission, which ensures that there is no overlap with transmissions of other CLDs. Once every CLD assigned to that particular CSD has been acknowledged, the CSD formats a message with the information about serial numbers of the CLDs, RSSI values received, position, time and date and reports this message to the CMS via the main communication channel of the wide area network (for example via GSM, GPRS, LPWAN, satellite or other). This is the information that will be monitored by the CCC and by the customer via the customer information system.

The CSD also determines the average RSSI value of every CLD and creates a chronological history. At the same time, there is an algorithm running in the CPU of the RF CLD supervisor of the CSD, which monitors the RSSI values between the CSD and the CLDs that are determined by the CSD. If the value drops to a level that indicates that one or more CLD(s) and therefore one or more pieces of cargo is/are no longer in range, because the cargo for example is stolen, the CSD delivers an alert message to the CCC.

Also, since the CLDs are no longer detecting acknowledge messages from the CSD, the CLDs will automatically switch from monitoring mode to tracking mode. In this mode the CLD transmits the tracking signal, which contains its unique serial number for identification and a tail of zeroes for the tracking equipment to perform direction finding and location of the cargo. By transmitting the tracking signal the tracking operation of the fixed and mobile tracking means is facilitated. Simultaneously, the internal CPU of the CLD continuously calculates the changes in RSSI level from the CSD. When the CLD decides, based on the specific algorithm, that proximity to the CSD has changed over or below a given threshold, it automatically switches to tracking mode.

After one operation of tracking and detection of the cargo, the batteries of the CLDs, CSDs, PBs and DMs preferably are replaced by fresh ones or recharged to ensure operation for the next tracking cycle.

For the wireless communications between the CLDs, the CSD and tracking means according to the present invention, in general all communication channels can be used. Usually the communication channels are regulated, depending upon the country in which the system according to the present invention is intended to operate. Once the correct frequencies are identified, there are no restrictions preventing the wireless links between the CLDs, the CSD and the tracking means.

The invention furthermore relates to a method for tracking and recovering a lost cargo item by use of an inventive system, the system comprising tracking means, especially stationary and/or mobile tracking devices, wherein the at least one cargo location device intermittently provides coordinates, in particular LAT/LONG coordinates, at least when the cargo location device is in tracking mode, and transmits the coordinates provided by the GPS module to the cargo control means which then provides the coordinates to the tracking means, which use them to track and recover the at least one cargo location device.

Preferably, the coordinates are used to direct mobile tracking devices, for example cars, aircraft, drones etc., to the general area where the at least one cargo location device is located according to the coordinates. Then VHF units are preferably used to do final tracking and recovery of the at least one cargo location device.

According to the present invention, due to the combination of monitoring the cargo in monitoring mode and being able to track and recover stolen cargo that is equipped with a CLD in tracking mode, a holistically cargo transportation security procedure, covering all possible events, is ensured.

In the following, the system according to the present invention is presented in detail by means of the examples given in the figures 1 to 5. From these figures,
- figure 1: shows a block diagram of the components of one embodiment of a cargo monitoring, tracking and recovery system according to the present invention,
- figure 2: shows a block diagram of the internal components of the CLD shown in figure 1,
- figure 3: shows a block diagram of the internal components of the CSD as shown in figure 1 as well as a display means,
- figure 4: shows the CLDs, CSD, PBs and DM shown in figure 1 being disposed at a truck and
- figure 5: shows the CLDs being in communication with the tracking means, i.e. the CLSs and CTSs.

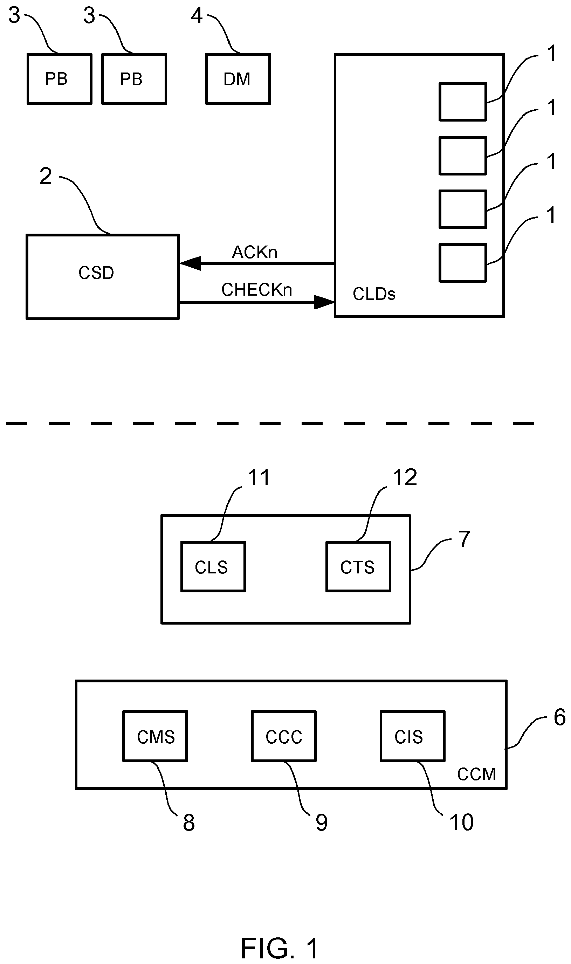

Figure 1 shows a schematic representation, in particular a block diagram of one embodiment of a cargo monitoring, tracking and recovery system according to the present invention. The system is a modular system comprising several components that can in general be divided into two main sections. The first section, shown in the upper part of figure 1, comprising components of the inventive system, that always travel along with cargo pieces that are to monitored during their transportation and a second section, shown in the lower part of figure 1, comprising components of the system being located remote from the cargo. The first and the second section are divided by a dashed line.

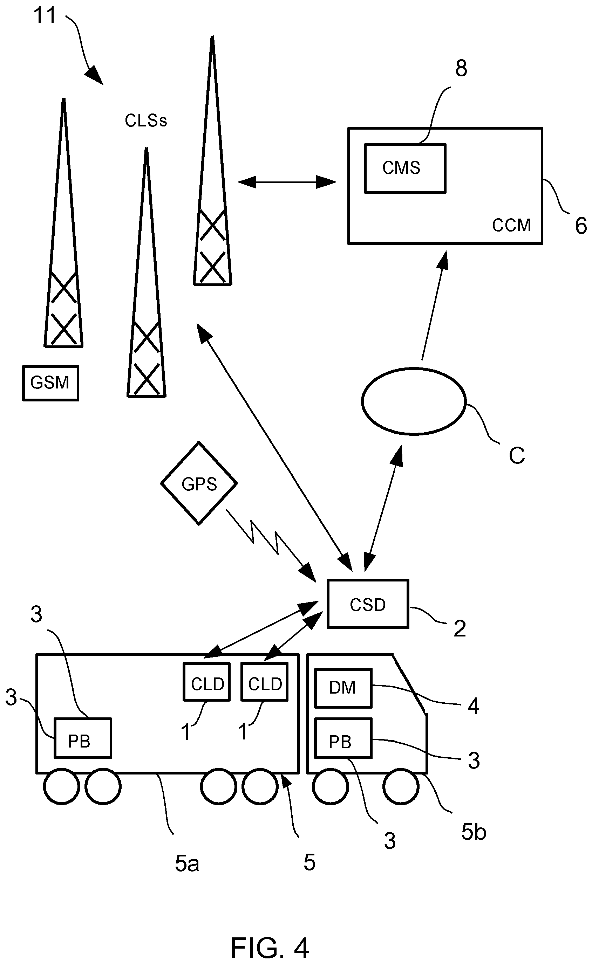

The components traveling along with the cargo are four cargo location devices 1 (CLDs), a cargo supervising device 2 (CSD), two panic buttons 3 (PBs) and a display means 4 (DM). As can be seen in figure 4, these components are all disposed at a truck 5, which is used for cargo transportation. Within the cargo hold 5a of the truck 5, several cargo items are stored, which are not shown in the figure. The CLDs 1 are each hidden within one of the cargo items. The CSD 2 is positioned at the cabin 5b of the truck 5 and configured to be on one hand in short range communication with the CLDs 1, via the exchange of radio frequency messages and on the other hand in long range communication with cargo control means 6 (CCM), due to the exchange of messages via GSM and internet, as shown in figure 4 (schematically depicted with a cloud C). The DM 4 is positioned within the cabin 5b in such a way, that the driver of the truck 5 can conveniently watch the DM 4 while he is driving the truck 5. Also disposed within the cabin 5b of the truck 5 is one PB 3. The second PB 3 is positioned within the cargo hold 5a. In this manner, one PBs 3 can be pressed by the driver sitting in the cabin 5b and the other PB 3 can be pressed by a person escorting the cargo in the cargo hold 5a.

Alternatively to the described embodiment more than one truck might be used for cargo transportation. In this case all trucks will be equipped like the one described above and the system according to the present invention will comprise more than one CSD 2. Furthermore, if the cargo of more than one client has to be simultaneously monitored, there can also be more than one transport means, which would all be equipped with a CSD 2, several CLDs 1, PBs 3 and at least one DM 4.

The components being positioned remote to the truck 5 and thereby remote to the cargo are the cargo control means 6 (CCM) and the tracking means 7. The CCM 6 comprise a cargo management server 8 (CMS), which is located at a secure place for data servers. The CCM 6 furthermore comprises a cargo control center 9 (CCC), which is positioned at the head quarter of the undertaking operating the system according to the present invention and a customer information system 10 (CIS), which is a group of secured base software applications that are loaded in the CMS 8 of the CCM 6.

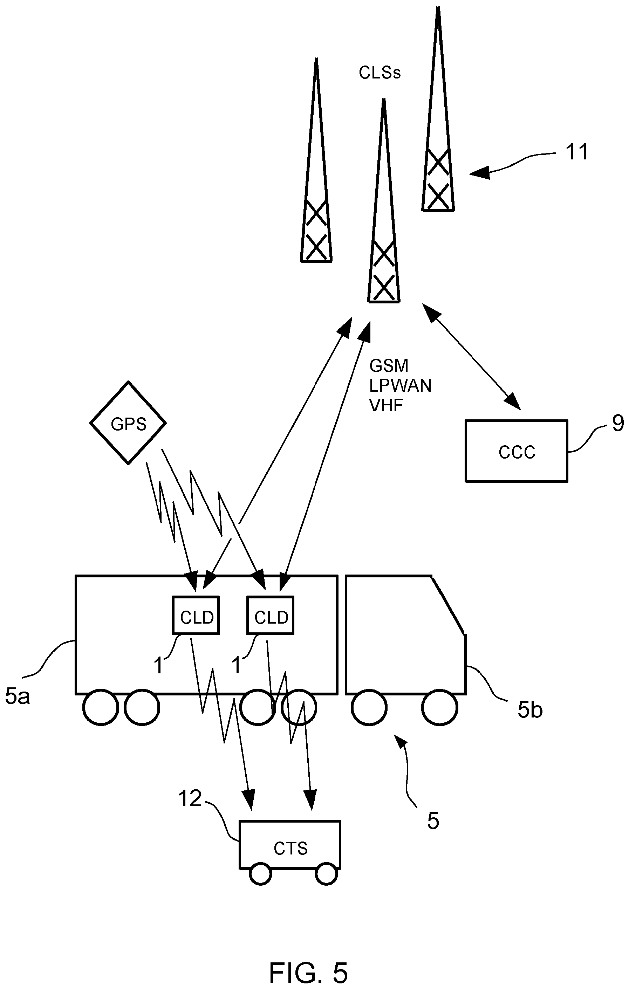

As tracking means 7 fixed tracking means, also referred to as cargo listening stations 11 (CLSs) as well as mobile tracking means, also referred to as cargo tracking stations 12 (CTSs) are provided. As can be seen in figure 5, the CLSs 11 are a group of towers that are positioned with distance between them over a given geographical region. The CLSs 11 - in analogy to the towers used for mobile phone communication - thereby form a grid. The mobile tracking devices, i.e. the CTSs 12 are specially equipped cars, planes, helicopters and/or marine craft.

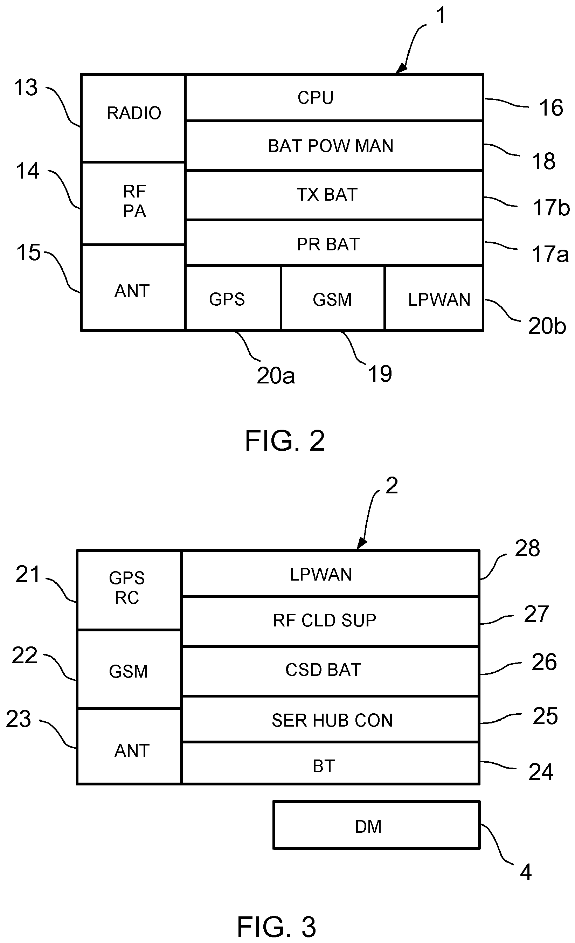

The CLDs 1 are autonomous devices, which each have the form of a small box, so that they can be easily hidden within the cargo items, for example within the packaging of the cargo. Here, the CLDs 1 are or comprise half-duplex digital modulation radio frequency transceivers. As can be seen in figure 2, which shows the internal components of CLD 1, each CLD 1 comprises a radio module in the form a radio chip 13, a radio frequency power amplifier 14, an antenna 15, a CPU 16, a primary battery 17a, a transmit battery 17b as well as a battery power management system 18. Both, the primary battery 17a and the transmit battery 17b are rechargeable and configured to last four months without the need of recharging. The radio chip 13 is in charge of generating modulated radio frequency signals to be transmitted from the CLD 1, and of demodulating signals that are received by the CLD 1. Data sent or received by the radio chip 13 will be exchanged with the CPU 16 of the CLD 1, which is in charge of data analysis of the radio signals received, especially in charge of determining the current distance to the CSD 2, from the historical signal strength of the radio signals sent by the CSD 2. The antenna 15 is provided for emitting and receiving radio signals, while the radio frequency power amplifier 14 allows for the transition of radio frequency signals. The primary battery 17a is for the operation of the CPU 16 and the radio chip 13 of the CLDs 1. The primary battery 17a is a long time, low current battery. Since the power drain for the operation of the radio frequency power amplifier 14 is comparably high, the transmit battery 17b is provided, which energizes the radio frequency power amplifier 14. The battery power management system 18 is for the control of power consumption of the primary battery 17a and the transmit battery 17b.

The CLDs 1 are configured to intermittently send radio frequency check messages to the CSD 2, as indicated in figure 1 with an arrow labeled "CHECKn".

Furthermore, the CLDs 1 are configured to automatically switch from monitoring mode to tracking mode in response to several events. On one hand this happens when a radio frequency signal transmission from the CSD 2 ends. On the other hand, this happens when one of the PBs 3 is activated by the driver or a person accompanying the cargo.

Also, means for determining the spatial distance between the CLDs 1 and the CSD 2 are provided within each CLD 1. Here, in the CPU 16 of the CLDs 1 a specific algorithm is implemented, which continuously calculates the changes in the signal strength of the radio signals that are transmitted from the CSD 2 to the CLDs 1, in particular continuously calculates the changes in RSSI-value from the signals sent by the CSD 2. The CLDs 1 will also switch from monitoring to tracking mode, when the value of the RSSI between a CLD 1 and the CSD 2 changes more than a maximal change-value. Furthermore, a RSSI value between CLDs1 and CSD 2 is stored within the CLDs 1, which approximately corresponds to the spatial dimensions of the cargo hold 5a of the truck 5. If the RSSI exceeds a given change, the respective CLD 1 will also automatically switch from monitoring to tracking mode.

The CLD 1 further comprises a GSM module 19 with a GSM radio modem, which is configured to be registered to the existing cellular network. With the use of the GSM module 19 it is possible to determine the position of the CLDs 1 with a precision of at least up to one cell of the cellular network.

The CLDs 1 furthermore comprise a GPS receiver module 20a, which preferably is controlled by the CLD's CPU 16 and which may periodically power up, receive and calculate coordinates, in particular LAT/LONG position, and sends such, preferably provides such position to the CSM 8 and which can then be provided to CTS 12 operators to assist in tracking and recovering of CLDs 1.

The CLDs 1 further each comprise a LPWAN module 20b, such as that offered by Sigfox or other LPWAN module suppliers, which operate on a non GSM private network for The Internet of Things (IoT) applications that utilize low data rate and offer much lower power consumption than GSM modules, the advantage being longer battery life and lower module cost. Furthermore, the LPWAN provides redundant capability for control of the CLDs 1 by means of communicating activation and deactivation command signals from the CCC 9 via the LPWAN. LPWAN stands for low-power wide-area network.

The CLDs 1 are configured to switch from monitoring mode to tracking mode in response to receiving a tracking activation message that is sent via at least one of a GSM network, a LPWA network and a radio, preferably a VHF radio network. In the shown example, the CLDs 1 can in detail be switched from monitoring mode to tracking mode in five different was, namely:
- when a radio frequency signal transmission from the CSD 2 ends,
- when one of the PBs 3 is activated by the driver or a person accompanying the cargo,
- when the CCM 6 sends them a tracking activation message via GSM,
- when the CCM 6 sends them a tracking activation message via LPWAN, for example Sigfox,
- when the CCM 6 sends them a tracking activation message via a radio network, preferably via a VHF radio network.

The CLDs 1 are configured accordingly, in the shown example inter alia comprise modules for the different networks.

The tracking activation messages, which might also be called " activation codes" (AC), can/will be sent by the cargo control means CCM 6, namely the cargo control center CCC 9 of the CCM 6 via GSM/LPWAN/VHF. In the shown example, the tracking means 7, namely the CLSs 11 of the tracking means 7, are used to send/forward the activation messages that originate from the CCC 9 to the CLDs 1 via GSM/LPWAN/VHF. The CLSs 11 are embodied and/or configured accordingly. This is schematically shown in figure 5 with a double-arrow connecting the CCC 9 and the CLSs 11 as well as further double-arrows connecting the CLSs 11 and the CLDs 1. Preferably, the CCC 9 is embodied and configured to control the CLSs 11 accordingly. The CLSs 11 are embodied and/or configured to send messages via GSM, LPWAN and radio, preferably VHF.

Since the tracking mode of the CLDs 1 can be activated in five different ways including GSM/LPWAN/VHF, a very high level of redundancy is achieved. This provides additional security because if one means has failed, for example due to frequency jamming, network issues, or component failure, another means can be employed.

In addition, the CLDs 1 are configured to switch (back) from tracking mode to monitoring mode in response to receiving a tracking deactivation message that is sent via at least one of a GSM network, a LPWAN and a radio, preferably a VHF radio network. In the present example, the tracking deactivation messages, which can also be called "deactivation codes", can/will also be sent by the cargo control means CCM 6, namely the cargo control center CCC 9 of the CCM 6 via GSM/LPWAN/VHF. In the shown example, the tracking means 7, namely the CLSs 11 of the tracking means 7, are also used to send/forward deactivation messages that originate from the CCC 9 to the CLDs 1. Again, the double-arrows connecting the CCC 9 and the CLSs 11 as well as the CLSs 11 and the CLDs 1 schematically depict this in figure 5.

When the tracking means 7 are also used for sending or forwarding activation and deactivation messages to the CLDs 1, they can also be called tracking and activation/deactivation means. In the following, for reasons of simplicity, the shorter term tracking means 7 is used.

The CSD 2 comprises several internal components, as can be seen in figure 3. Those are a GPS receiver 21, a GSM module 22, antennas 23, a bluetooth module 24, a serial hub controller 25, a battery 26 for supplying electrical energy to the CSD 2 and a RF CLD supervisor unit 27.

Furthermore, the CSD 2 comprises a LPWAN module 28. In other words, as is the case with the CLDs 1, the CSD 2 also contains redundant communication means.

The GPS receiver 21 allows the CSD 2 to determine and coordinates location information, speed, time and dates at any time during the cargo transport procedure with the truck 5. In the embodiment shown in figure 3 two GPS receivers 21 are provided in order to increase GPS information availability and reliability. Of the two GPS receivers 21 only one is shown in figure 3.

The GSM module 22 is a module for GPRS data communication over the cellular footprint with the CMS 8. There is also provided a second GSM module 22, which is not shown in the figure. The two GSM modules 22 have two different carriers to increase data communication reliability. Antennas 23 are used for transmitting and receiving radio signals, in a manner known per se.

The Bluetooth module 24 allows wireless communication between the CSD 2 and the DM 4.

The LPWAN module 28 allows for a communication via a LPWAN, such as Sigfox networks or similar networks.

The RF CLD supervisor unit 27 of the CSD 2 corresponds in its structure to that of a single CLD 1, as shown in figure 2, but has different internal programming. There is a radio chip and a power amplifier (not shown in figure 3) for the link with the CLDs 1. The RF CLD supervisor unit 27 is configured to monitor the CLD-channel in particular the VHF-channel, in order to listen to the check messages from the CLDs 1.

The serial hub controller 25 is in charge of internal serial communication between the GSM modules 22, the RF CLD supervisor unit 27 and the display means 4.

The CSD 2 furthermore is configured to send acknowledge radio signals (acknowledge messages) to the CLDs 1 in response to the check messages sent from the CLDs 1, as indicated in figure 1 with an arrow labeled "ACKn".

In analogy to the CLDs 1 and the CSD 2, the PBs 3 are also autonomous, self-powered devices. The PBs 3 comprise means for transmitting radio signals to and receiving radio signals from the CSD 2, an energy source as well as an alarm mechanism, which can be manually activated by the driver, or by a person accompanying the cargo in the cargo hold 5a. The display means 4 also comprise means for transmitting radio signals to and receiving radio signals from CSD 2, to be in wireless communication with the CSD 2.

The DM 4 enables the control as well as help checks of the system according to the present invention. The display means 4 is to display information to the driver of the truck 5. Furthermore, the driver can communicate via text messages with the CCC 9 or a customer.

The CCM 6, which forms the central controlling unit of the system according to the present invention, comprises the CCC 9, as shown in figure 1. The CCC 9 is a 24/7 control center, that provides all of the monitoring tasks of the cargo in transit. It also provides coordination with customers and authorities. Therefore, the CCC 9 has full access to all commands to the CSD 2, which is disposed at the truck 5. The CCC 9 is also configured and adapted to be able to send the tracking activation messages and the tracking deactivation messages to the CLDs 1 via GSM, LPWAN and a radio, preferably VHF network, to activate and deactivate the tracking mode of CLDs 1 in case cargo items equipped therewith are lost or stolen. In other words, the tracking mode can be activated as well as deactivated by the CCC 9 in different, redundant ways, namely be sending corresponding messages to the respective CLDs 1.

Preferably, tracking activation messages and/or tracking deactivation messages that are sent by the CCC 9 to one or more CLDs 1 comprise a unique code corresponding to the respective CLD 1. Such transmission can for example be via the CLS 11 utilizing the radio, preferably VHF, the GSM and/or the LPWAN networks.

In the shown example, each CLD 1 contains, in particular is programmed with, a number triplet comprised of a unique serial number, an activation Code, and a tracking code. The number triplet preferably is produced by an algorithm at the point of manufacture. The serial number is visible on the exterior of the CLD 1 packaging and the CLD 1 itself. The activation code (AC) and tracking code (TC) are unique codes programmed into the CPU of each CLD 1 when manufactured and are kept secret. Each time a group of CLDs 1 are manufactured, the number triplets are sent to the CCM 6 where they are stored in a data base. When a CLD 1 is attached to the material being transported, the Serial Number of the CLD 1 and the description (serial number or other identifier) of the material are joined and stored in a database at the CCM 6 such that the serial number is used only to keep track of the unique activation and tracking codes until such time as the CLD 1 has been deployed.

If the material being protected by a CLD 1 is stolen or lost, (and has not already self activated), the unique identifier of the material is reported to the CCM 6, which retrieves the activation code (AC) corresponding to the material and transmits the AC through all redundant means to insure activation of the CLD 1.

Once the CLD 1 has received its unique AC, it transmits its unique Tracking Code (TC) which is received by CLS 11 and CTS 12. The Number Triplet is designed to insure that the AC and TC can never be accessed by bad actors to control the process.

The CCM 6 furthermore comprises the CMS 8, which is a back end and heart of the operation of a system according to the present invention. The CMS 8 is configured to send and receive all necessary information to and from the CSD 2. It furthermore keeps data bases of all CSDs 2, which are currently used, of all CLDs 1, of position, date time, etc. It is furthermore configured to provide a mapping service for display of the CLDs 1 positioned to the CCC 9 and via the CIS 10 to the customer.

The CLSs 11, representing the fixed tracking means, are configured to receive the tracking signals that are emitted from the CLDs 1 in tracking mode. The CTSs 12, which are the mobile tracking means, are cars, aircraft, drones and/or other mobile platforms, that are equipped with devices that can receive the tracking signals emitted from the CLDs 1 in tracking mode. The tracking means are configured to decode and report all messages from the CLDs 1 and report all relevant information (serial number, position, date, time and RSSI-value) to the CMS 8 of the CCM 6. The CCC 9 of the CCM 6 then has real time information about position of the CLDs 1 and can easily coordinate the mobile tracking means, the CTSs 12 for final tracking and location of a stolen cargo item.

The CLSs 11 and the CTSs 12 furthermore comprise a radio frequency direction finding unit, which is configured to determine the bearing angle of the tracking signals transmitted from the CLDs 1 in tracking mode. The radio frequency direction finding unit is not shown in the figures. It comprises four or eight omni-directional antennas that are arranged in a circular way. The antennas are connected to an RF combining or a so called "summer" circuit, which allows the signals of the antennas to be combined in a way which simulates a continuous rotation of the circular antenna array about its axis of symmetry. The "rotating" antennas, which are used as a receiver, then relatively "move" with respect to the transmission source of the tracking signal, the CLDs 1 and the Doppler-effect can be used to determine the bearing angle of the CLDs 1 in a manner known to the person skilled in the art.

Furthermore, the CTSs 12 calculate the strength of the radio signals received from the CLDs 1, and display the RSS (relative signal strength) thereby providing an indication of the relative distance between the CTSs 12 and a CLD 1 being tracked, and allowing the CTS 12 operator to proceed in the direction that increases signal strength. The CTSs 12 are embodied and/or configured accordingly. The concept here in particular is that the signal strength increases as the distance to the transmitter decreases. Driving in the direction that increases signal strength leads finally to the location of the transmitter, here the CLD 1.

Equipped like this, the tracking means 7 can identify the direction and approximate distance of a CLD 1, which is hidden in a stolen cargo item to be tracked, and transmitting. Knowing the direction of origin, the CTSs 12 can be sent for final tracking of a stolen cargo item.

Also, the coordinates, in particular LAT/LONG coordinates provided by the GPS module 20a of the (respective) CLD 1 can be used to direct the CTSs 12, for example cars, aircraft, drones etc., to the general area where the (respective) CLD 1 is located to facilitate final tracking and recovery.

For secure storage the CSD 2, CLDs 1, the PBs 3 and the DM 4 during non-transport periods, there is be provided a "kit box", in which the components are stored while not in use. The "kit box" is not shown in the figures. The "kit box" comprises a deactivation mechanism, which automatically deactivates the CSD 2 and CLDs 1, PBs 3 and DM 4 as soon as they are positioned within the box.

For the monitoring of cargo items during their transportation, the system according to the present invention will be set up for a given trip by the customer through the CIS 10, with a shipment notification to the CCC 9. The CCC 9 acknowledges the notification by returning a "green light" to the customer and also to the driver of the truck 5. From this moment on, the CLDs 1 will start to transmit their unique check messages to the CSD 2 with a preset proof-of-life-rate and the CSD 2 will acknowledge all check messages from the CLDs 1, as indicated with the arrows labeled "ACKn" and "CHECKn" in figure 1. Every time the CSD 2 receives a check message from a CLD 1, it replies with an acknowledge message to the respective CLD 1, including not only the acknowledge itself, but also a time stamp of the clock of its internal system and the serial number assigned to that particular CLD 1. The CLD 1 then has enough information, to synchronize its own check message transmission, which ensures that there is no overlap with transmissions of other CLDs 1. Once every CLD 1 positioned within the cargo hold 5a of the truck 5 has been acknowledged, the CSD 2 formats a message with the information about serial numbers of the CLDs 1, RSSI values received, position, time and date and reports this message to the CMS 8 via the main communication channel of the wide area network, in the described embodiment GSM and internet, as shown in figure 4. This information will be monitored by the CCC 9 and by the customer via the CIS 10. Also shown in figure 4 is, that the current position of the CSD 2 and thereby the truck 5 is determined with the use of a satellite.

The CSD 2 also determines the average RSSI value of each CLD 1 and creates a chronological history. At the same time, there is an algorithm running in the CPU of the RF CLD supervisor unit 27 of the CSD 2, which monitors the RSSI values between the CSD 2 and the CLDs 1 that are determined by the CSD 2. If a cargo item is stolen from the cargo hold 5a of the truck 5, as indicated in figure 5, where two CLDs 1 are shown outside the cargo hold 5a, the RSSI- value drops to a level that indicates that cargo is no longer in range and the CSD 2 delivers an alert message to the CCC 9. Because the CLDs 1 are no longer detecting acknowledge messages from the CSD 2, they automatically switch to tracking mode.

The CSD 2 preferably can communicate to the CCM 6 via GSM, LPWAN and via Bluetooth in particular through the cloud (internet) C.

Also, if the driver or a person escorting the cargo notices that cargo is stolen, the driver or the person can press the PB 3 in the cargo hold 5a or the cabin 5b respectively. A signal will then be wirelessly transmitted from the activated PB 3 to the CSD 2 and the CSD 2 will in response to the signal deliver an emergency alert to the CCC 9. Also, then CSD 2 will cease the ACKn response and the CLDs 1 will switch from monitoring mode to tracking mode in response to the activation of a PB 3.

In certain situations it may be advantageous or important to be able to activate the CLDs 1 directly from the CCC 9, which would be necessary for instance when the CCC 9 cannot contact the transport means 5 operator, perhaps due to incapacitation by bad actors, and in which case the CLD 1 is not removed from the transport means 5 so that the CSD 2 continues to communicate with the CLD 1 by sending CHECKn messages and successfully receiving ACKn replies, so that the CLD 1 would not transmit a tracking signal.

In tracking mode the CLDs 1 will transmits the tracking signal, which contains the CLD's 1 unique serial number for identification and a tail of zeroes for the tracking means 7 to perform direction finding and location of the cargo. By transmitting the tracking signal, the tracking operation of the CLSs 11 and the CTSs 12 is facilitated.

Furthermore, via the GSM module 19 of the CLDs 1, the CLDs 1 location can be determined via the existing cellular network with the precision of at least up to one cell of the cellular network.

In tracking mode, the CLDs 1 can be tracked by different means, namely by the CLSs 11 or mobile VHF trackers, namely the CTSs 12, by a GSM tower network that can receive tracking transmissions from CLDs 1 that contain GPS Lat/Long, or by a proprietary LPWAN that provides location information utilizing Internet of Things (IoT) techniques, such as Sigfox.

The CLSs 11 can track CLDs 1 in different ways.

The CLSs 11 in particular track to the CLDs 1 by direction and signal strength. The CLDs 1, which comprise a GPS module 20a, provide location by providing accurate LAT/LONG coordinates. The GSM and LPWAN networks can calculate general position by triangulation, the calculations for which can be done in the network by the service provider.

In the shown example, the CLSs 11 can track CLDs 1 in tracking mode via either one of a radio, in particular VHF network, via GSM or LPWAN. The CLSs 11, which preferably are a corresponding tower network, are embodied and/or configured accordingly.

Such redundancy improves the likelihood of successful recovery of a stolen or missing CLD 1. Further, a combination of these means is beneficial, for instance a CLS 11 transmission that is received by the CCM 6 via a GSM network would provide the CLS' 11 GPS location data which can then be used to direct a mobile tracking unit CTS 12 to the area where the CLS 11 is located.

After one operation of tracking and detection of the cargo, the batteries of the CLDs 1, CSD 2, PBs 3 and DM 4 will be recharged to ensure operation for the next monitoring and tracking cycle.

According to the present invention, due to the combination of monitoring the cargo in monitoring mode and being able to trace and recover a stolen cargo item, that is equipped with a CLD 1, in tracking mode, a holistically CBNRE or cargo transportation security procedure, covering all possible events, is ensured.

### Reference Character List

- 1: cargo location device
- 2: cargo supervising device
- 3: panic button
- 4: display means
- 5: truck
- 5a: cargo hold
- 5b: cabin
- 6: cargo control means
- 7: tracking means
- 8: cargo management server
- 9: cargo control center
- 10: customer information system
- 11: cargo listening station
- 12: cargo tracking station
- 13: radio chip
- 14: radio frequency power amplifier
- 15: antenna
- 16: CPU
- 17a: primary battery
- 17b: transmit battery
- 18: battery power management system
- 19: GSM module
- 20a: receiver module
- 20b: LPWAN module
- 21: GPS receiver
- 22: GSM module
- 23: antenna
- 24: bluetooth module
- 25: serial hub controller
- 26: battery
- 27: RF CLD supervisor unit
- 28: LPWAN module

## Claims

1. Cargo location device (1), configured to be disposed at, especially hidden in a cargo item or a group of cargo items, the cargo location device (1) comprising means for wirelessly transmitting and receiving signals, a central processing unit (16) and at least one energy source (17a, 17b), and being configured to be operated in a monitoring mode in which it transmits a monitoring signal, which is receivable by monitoring means (2) and a tracking mode in which it transmits a tracking signal which is traceable by tracking means (7), wherein the means for wirelessly transmitting and receiving the signals comprise a GSM module (19) and a GPS module (20a) and a radio module (13), preferably a VHF radio module, **characterized in that** the means for wirelessly transmitting and receiving the signals also comprise a LPWAN module (20b) and **in that** the cargo location device (1) is configured to switch from monitoring mode to tracking mode in response to receiving a tracking activation message that can be sent via a GSM network, a LPWAN and a radio network, preferably a VHF radio network, wherein the cargo location device (1) is configured such that the GPS module (20a) intermittently provides coordinates, in particular LAT/LONG coordinates, at least when the cargo location device (1) is in tracking mode, and **in that** it transmits the coordinates provided by the GPS module (20a).

2. Cargo monitoring, tracking and recovery system, comprising:
- at least one cargo location device (1) according to claim 1,
- at least one cargo supervising device (2), configured to be disposed at a transport means (5) for the cargo items, comprising means (27) for wirelessly transmitting signals to and wirelessly receiving signals from the at least one cargo location device (1) and at least one energy source (26), and
cargo control means (6), comprising means for wirelessly sending data to and wirelessly receiving data from the at least one cargo supervising device (2) and a database, the cargo control means (6) being configured to store data, especially data that has been sent to or received from the at least one cargo supervising device (2), in the data base,
wherein the monitoring signal being wirelessly transmitted by the at least one cargo location device (1) in monitoring mode is adapted to be received by the at least one cargo supervising device (2).

3. System according to claim 2, **characterized in that** the at least one cargo location device (1) is configured to intermittently send check signals to the at least one cargo supervising device (2) in monitoring mode and the at least one cargo supervising device (2) is configured to intermittently send acknowledge signals to the at least one cargo location device (1) in response to the check signals,
wherein the at least one cargo location device (1) is configured to switch from monitoring mode to tracking mode when it does not receive an acknowledge signal in predefined time period after sending a check signal.

4. System according to claim 2 or 3, **characterized in that** at least one wireless alarm device (3), which is configured to be joined to the transport means (5) for the cargo items is provided, the at least one wireless alarm device (3) comprising at least one energy source and means for transmitting alarm signals to the at least one cargo location device (1) and being adapted to be manually activated by a user, wherein the at least one wireless alarm device (3) is configured to send an alarm signal to the at least one cargo location device (1) in response to being manually activated by a user, and
wherein the at least one cargo location device (1) is configured to switch from monitoring mode to tracking mode in response to receiving an alarm signal from the at least one wireless alarm device (3).

5. System according to one of claims 2 to 4, **characterized in that** the at least one cargo location device (1) is configured to switch from tracking mode to monitoring mode in response to receiving a monitoring activation message that is sent via at least one of a GSM network, a LPWAN and a radio, preferably a VHF radio network, in particular by the cargo control means (6).

6. System according to one of claims 2 to 5, **characterized in that** the cargo control means (6) are configured to send tracking activation messages and/or monitoring activation messages to the at least one cargo location device (1) that comprise a unique activation code of the at least one cargo location device (1).

7. System according to one of claims 2 to 6, **characterized in that** the at least one cargo location device (1) comprises means for determining its spatial distance to the cargo supervising device (2) and is configured to switch from monitoring mode to tracking mode when a given value of spatial distance is exceeded and/or when a current value of spatial distance is changed and/or when a signal transmission from the at least one cargo supervising device (2) to the at least one cargo location device (1) ends.

8. System according to one of claims 2 to 7, **characterized in that** the means for wirelessly transmitting and receiving signals of the at least one cargo location device (1) comprise a radio chip (13), which is configured to generate modulated radio signals and to demodulate radio signals and/or at least one antenna (15) and/or a power amplifier (14) and/or **in that** the energy source of the at least one cargo location device (1) comprises a primary battery (17a), a transmit battery (17b) and a battery power management system (18).

9. System according to one of claims 2 to 8, **characterized in that** the GSM module (19) of the at least one cargo location device (1) comprises a GSM radio modem configured to be registered to a cellular network.

10. System according to one of claims 2 to 9, **characterized in that** the at least one cargo supervising device (2) comprises means for determining its spatial distance to the at least one cargo location device (1) and is configured to switch to an alert mode when a given value of spatial distance is exceeded and/or when a current value of spatial distance is changed.

11. System according to one of claims 2 to 10, **characterized in that** the at least one cargo supervising device (2) is configured to communicate with a number of cargo location devices (1) which are assigned to the at least one cargo supervising device (2).

12. System according to one of claims 2 to 11, **characterized in that** the at least one cargo supervising device (2) comprises at least one GPS receiver (21) and/or at least one GSM module (22) and/or at least one Bluetooth module (24) and/or at least one antenna (23) and/or at least one serial hub controller (25), and/or a RF cargo location device supervisor unit (27) with a radio chip, a radio power amplifier and a central processing unit, and/or **in that** the at least one cargo supervising device (2) comprises a LPWAN module (28).

13. System according to one of claims 2 to 12, **characterized in that** the cargo control means (6) comprise a cargo control center (9), configured to control the at least one cargo supervising device (2) and/or a cargo management server (8), configured to keep data bases with information about the at least one cargo supervising device (2) and the at least one cargo location device (1), about date, time and position and/or the cargo control means (6) are configured to send information to and receive information from a customer via a software based, especially web based, customer information system (10).

14. System according to one of claims 2 to 13, **characterized in that** tracking means (7), especially stationary (11) and/or mobile (12) tracking devices, are provided, which are configured to trace a tracking radio signal transmitted by the at least one cargo location device (1) in tracking mode, wherein especially the tracking means (7) comprise a radio frequency direction finding unit, which is configured to determine the bearing angle of the tracking signal transmitted from the at least one cargo location device (1) in tracking mode, especially by application of a Doppler shift based radio frequency direction finding technology.

15. Method for tracking and recovering a lost cargo item by use of a system according to any one of claims 2 to 14, the system comprising tracking means (7), especially stationary (11) and/or mobile (12) tracking devices, wherein the at least one cargo location device (1) intermittently provides coordinates, in particular LAT/LONG coordinates, at least when the cargo location device (1) is in tracking mode, and transmits the coordinates provided by the GPS module (20a) to the cargo control means (6) which then provides the coordinates to the tracking means, which use them to track and recover the at least **one** cargo location device (1).

## Patentansprüche

1. Frachtortungsvorrichtung (1), die zur Anordnung an einem, insbesondere zum Verstecken in einem Frachtgut oder einer Gruppe von Frachtgütern ausgebildet ist, wobei die Frachtortungsvorrichtung (1) Mittel zum drahtlosen Senden und Empfangen von Signalen, eine zentrale Verarbeitungseinheit (16) und mindestens eine Energiequelle (17a, 17b) umfasst und zum Betrieb in einem Überwachungsmodus, in dem sie ein Überwachungssignal sendet, das von Überwachungsmitteln (2) empfangbar ist, und einem Tracking-Modus, in dem sie ein Trackingsignal sendet, das von Trackingmitteln (7) auffindbar ist, ausgebildet ist, wobei die Mittel zum drahtlosen Senden und Empfangen der Signale ein GSM-Modul (19) und ein GPS-Modul (20a) und ein Funkmodul (13), vorzugsweise ein VHF-Funkmodul, umfassen, **dadurch gekennzeichnet, dass** die Mittel zum drahtlosen Senden und Empfangen der Signale auch ein LPWAN-Modul (20b) umfassen, und dass die Frachtortungsvorrichtung (1) so konfiguriert ist, dass sie als Reaktion auf den Empfang einer Tracking-Aktivierungsnachricht, die über ein GSM-Netz, ein LPWAN und ein Funknetz, vorzugsweise ein UKW-Funknetz, gesendet werden kann vom Überwachungsmodus in den Tracking-Modus umschaltet, wobei die Frachtortungsvorrichtung (1) so konfiguriert ist, dass das GPS-Modul (20a) zumindest dann, wenn sich die Frachtortungsvorrichtung (1) im Tracking-Modus befindet, intermittierend Koordinaten, insbesondere LAT/LONG-Koordinaten, liefert, und dass es die vom GPS-Modul (20a) gelieferten Koordinaten überträgt.

2. System zur Überwachung, zum Tracken und zum Auffinden einer Fracht, bestehend aus:
- mindestens einer Frachtortungsvorrichtung (1) nach Anspruch 1,
- mindestens einer Frachtüberwachungsvorrichtung (2), die so konfiguriert ist, dass sie an einem Transportmittel (5) für die Frachtstücke angeordnet werden kann, mit Mitteln (27) zum drahtlosen Senden von Signalen an die mindestens eine Frachtortungsvorrichtung (1) und zum drahtlosen Empfangen von Signalen von dieser und mindestens einer Energiequelle (26), und
Frachtkontrollmitteln (6), das Mittel zum drahtlosen Senden von Daten an die mindestens eine Frachtüberwachungsvorrichtung (2) und zum drahtlosen Empfangen von Daten von dieser und eine Datenbank umfasst, wobei das Frachtkontrollmittel (6) so konfiguriert ist, dass es Daten, insbesondere Daten, die an die mindestens eine Frachtüberwachungsvorrichtung (2) gesendet oder von dieser empfangen wurden, in der Datenbank speichert,
wobei das Überwachungssignal, das von der mindestens einen Ladungsortungsvorrichtung (1) im Überwachungsmodus drahtlos gesendet wird, von der mindestens einer Frachtüberwachungsvorrichtung (2) empfangen werden kann.

3. System nach Anspruch 2, **dadurch gekennzeichnet, dass** die mindestens eine Frachtortungsvorrichtung (1) so konfiguriert ist, dass sie im Überwachungsmodus intermittierend Prüfsignale an die mindestens eine Frachtüberwachungsvorrichtung (2) sendet, und die mindestens eine Frachtüberwachungsvorrichtung (2) so konfiguriert ist, dass sie in Reaktion auf die Prüfsignale intermittierend Bestätigungssignale an die mindestens eine Frachtortungsvorrichtung (1) sendet
wobei die mindestens eine Frachtortungsvorrichtung (1) so konfiguriert ist, dass sie vom Überwachungsmodus in den Tracking-Modus umschaltet,
wenn sie innerhalb einer vordefinierten Zeitspanne nach dem Senden eines Prüfsignals kein Bestätigungssignal empfängt.

4. System nach Anspruch 2 oder 3, **dadurch gekennzeichnet, dass** mindestens eine drahtlose Alarmvorrichtung (3) vorgesehen ist, die so konfiguriert ist, dass sie mit dem Transportmittel (5) für die Frachtstücke verbunden werden kann, wobei die mindestens eine drahtlose Alarmvorrichtung (3) mindestens eine Energiequelle und Mittel zum Übertragen von Alarmsignalen an die mindestens eine Frachtortungsvorrichtung (1) umfasst und so angepasst ist, dass sie von einem Benutzer manuell aktiviert werden kann, wobei die mindestens eine drahtlose Alarmvorrichtung (3) so konfiguriert ist, dass sie als Reaktion auf eine manuelle Aktivierung durch einen Benutzer ein Alarmsignal an die mindestens eine Frachtortungsvorrichtung (1) sendet, und wobei die mindestens eine Frachtortungsvorrichtung (1) so konfiguriert ist, dass sie als Reaktion auf den Empfang eines Alarmsignals von der mindestens einen drahtlosen Alarmvorrichtung (3) vom Überwachungsmodus in den Tracking-Modus umschaltet.

5. System nach einem der Ansprüche 2 bis 4, **dadurch gekennzeichnet, dass** die mindestens eine Frachtortungsvorrichtung (1) so konfiguriert ist, dass sie vom Tracking-Modus in den Überwachungsmodus umschaltet, wenn sie eine Überwachungsaktivierungsnachricht empfängt, die über mindestens ein GSM-Netz, ein LPWAN oder ein Funknetz, vorzugsweise ein UKW-Funknetz, insbesondere durch die Frachtkontrollmittel (6), gesendet wird.

6. System nach einem der Ansprüche 2 bis 5, **dadurch gekennzeichnet, dass** die Frachtkontrollmittel (6) so konfiguriert sind, dass sie Tracking-Aktivierungsnachrichten und/oder Überwachungs-Aktivierungsnachrichten an die mindestens eine Frachtortungsvorrichtung (1) senden, die einen eindeutigen Aktivierungscode der mindestens einen Frachtortungsvorrichtung (1) umfassen.

7. System nach einem der Ansprüche 2 bis 6, **dadurch gekennzeichnet, dass** die mindestens eine Frachtortungsvorrichtung (1) Mittel zur Bestimmung ihres räumlichen Abstandes zu der Frachtüberwachungsvorrichtung (2) aufweist und dazu ausgebildet ist, bei Überschreiten eines vorgegebenen Wertes des räumlichen Abstandes und/oder bei Änderung eines aktuellen Wertes des räumlichen Abstandes und/oder bei Beendigung einer Signalübertragung von der mindestens einen Frachtüberwachungsvorrichtung (2) zu der mindestens einen Frachtortungsvorrichtung (1) vom Überwachungsmodus in den Tracking-Modus zu wechseln.

8. System nach einem der Ansprüche 2 bis 7, **dadurch gekennzeichnet, dass** die Mittel zum drahtlosen Senden und Empfangen von Signalen der mindestens einen Frachtortungsvorrichtung (1) einen Funkchip (13), der zum Erzeugen von modulierten Funksignalen und zum Demodulieren von Funksignalen konfiguriert ist, und/oder unter mindestens eine Antenne (15) und/oder einen Leistungsverstärker (14) umfassen und/oder dass die Energiequelle der mindestens einen Frachtortungsvorrichtung (1) eine Primärbatterie (17a), eine Sendebatterie (17b) und ein Batterieleistungsmanagementsystem (18) umfasst.

9. System nach einem der Ansprüche 2 bis 8, **dadurch gekennzeichnet, dass** das GSM-Modul (19) der mindestens einen Frachtortungsvorrichtung (1) ein GSM-Funkmodem umfasst, das so konfiguriert ist, dass es in einem zellularen Netzwerk registriert werden kann.

10. System nach einem der Ansprüche 2 bis 9, **dadurch gekennzeichnet, dass** die mindestens eine Frachtüberwachungsvorrichtung (2) Mittel zur Bestimmung ihres räumlichen Abstands zu der mindestens einen Frachtortungsvorrichtung (1) umfasst und so konfiguriert ist, dass sie bei Überschreiten eines vorgegebenen Wertes des räumlichen Abstands und/oder bei Änderung eines aktuellen Wertes des räumlichen Abstands in einen Alarmmodus schaltet.

11. System nach einem der Ansprüche 2 bis 10, **dadurch gekennzeichnet, dass** die mindestens eine Frachtüberwachungsvorrichtung (2) konfiguriert ist, um sie mit einer Anzahl von Frachtortungsvorrichtungen (1) zu kommunizieren, die der mindestens einen Frachtüberwachungseinrichtung (2) zugeordnet sind.

12. System nach einem der Ansprüche 2 bis 11, **dadurch gekennzeichnet, dass** das mindestens eine Frachtüberwachungsvorrichtung (2) mindestens einen GPS-Empfänger (21) und/oder mindestens ein GSM-Modul (22) und/oder mindestens ein Bluetooth-Modul (24) und/oder mindestens eine Antenne (23) und/oder mindestens einen seriellen Hub-Controller (25) und/oder eine HF-Frachtüberwachungseinheit (27) mit einem Funkchip, einem Funkleistungsverstärker und einer zentralen Verarbeitungseinheit umfasst, und/oder dass das mindestens eine Frachtüberwachungsvorrichtung (2) ein LPWAN-Modul (28) umfasst

13. System nach einem der Ansprüche 2 bis 12, **dadurch gekennzeichnet, dass** die Frachtkontrollmittel (6) ein Frachtkontrollzentrum (9) umfassen, das so konfiguriert ist, dass es die mindestens eine Frachtüberwachungsvorrichtung (2) steuert, und/oder einen Frachtverwaltungsserver (8), der so konfiguriert ist, dass er Datenbanken mit Informationen über die mindestens eine Frachtüberwachungsvorrichtung (2) und die mindestens eine Frachtortungsvorrichtung (1), über Datum, Zeit und Position führt, und/oder dass die Frachtkontrollmittel (6) so konfiguriert sind, dass sie über ein softwarebasiertes, insbesondere webbasiertes, Kundeninformationssystem (10) Informationen an einen Kunden senden und von diesem empfangen.

14. System nach einem der Ansprüche 2 bis 13, **dadurch gekennzeichnet, dass** Tracking-Mittel (7), insbesondere stationäre (11) und/oder mobile (12) Tracking-Mittel, vorgesehen sind, die ausgebildet sind, ein von der mindestens einen Frachtortungsvorrichtung (1) im Tracking-Modus ausgesendetes Tracking-Funksignal zu verfolgen, wobei insbesondere die Tracking-Mittel (7) eine Hochfrequenzpeileinheit umfassen, die ausgebildet ist, den Peilwinkel des von der mindestens einen Frachtortungsvorrichtung (1) im Tracking-Modus ausgesendeten Tracking-Signals zu bestimmen, insbesondere durch Anwendung einer auf Dopplerverschiebung basierenden Hochfrequenzpeiltechnik.

15. Verfahren zur Ortung und Wiederauffindung eines verlorenen Frachtstücks unter Verwendung eines Systems nach einem der Ansprüche 2 bis 14, wobei das System Ortungsmittel (7), insbesondere stationäre (11) und/oder mobile (12) Ortungsgeräte, umfasst, wobei die mindestens eine Frachtortungsvorrichtung (1) zumindest im Tracking-Modus intermittierend Koordinaten, insbesondere LAT/LONG-Koordinaten, zumindest dann liefert, wenn sich die Frachtortungsvorrichtung (1) im Tracking-Modus befindet, und die vom GPS-Modul (20a) gelieferten Koordinaten an die Frachtsteuerungsvorrichtung (6) übermittelt, die die Koordinaten dann an die Ortungseinrichtung liefert, die sie verwendet, um die zumindest eine Frachtsortungsvorrichtung (1) zu orten und wiederzufinden.

## Revendications

1. Dispositif de localisation de cargaison (1), configuré pour être dispose à, en particulier caché dans un article de cargaison ou un groupe d'articles de cargaison, le dispositif de localisation de cargaison (1) comprenant des moyens de transmission et de réception sans fil de signaux, une unité centrale de traitement (16) et au moins une source d'énergie (17a, 17b), et étant configuré pour fonctionner dans un mode de surveillance dans lequel il transmet un signal de surveillance, qui peut être reçu par des moyens de surveillance (2) et un mode de suivi dans lequel il transmet un signal de suivi traçable par des moyens de suivi (7), où dans lequel les moyens de transmission et de réception sans fil des signaux comprennent un module GSM (19), un module GPS (20a) et un module radio (13), de préférence un module radio OUC, **caractérisé par le fait que** les moyens de transmission et de réception sans fil des signaux comprennent également un module LPWAN (20b) et **par le fait que** le dispositif de localisation de cargaison (1) est configuré pour passer du mode surveillance au mode suivi en réponse à la réception d'un message d'activation du suivi qui peut être envoyé par l'intermédiaire d'un réseau GSM, un réseau LPWAN et un réseau radio, de préférence un réseau radio OUC, dans lequel le dispositif de localisation de cargaison (1) est configuré de manière à ce que le module GPS (20a) fournisse par intermittence des coordonnées, en particulier des coordonnées LAT/LONG, au moins lorsque le dispositif de localisation de fret (1) est en mode suivi, et à ce qu'il transmette les coordonnées fournies par le module GPS (20a).

2. Système de suivi, de repérage et de récupération des cargaisons, comprenant :
- au moins un dispositif de localisation de la cargaison (1) selon la revendication 1,
- au moins un dispositif de surveillance de la cargaison (2), configuré pour être placé sur un moyen de transport (5) pour les articles de cargaison, comprenant des moyens (27) pour transmettre sans fil des signaux à et recevoir sans fil des signaux de l'au moins un dispositif de localisation de la cargaison (1) et au moins une source d'énergie (26), et
des moyens de contrôle de la cargaison (6), comprenant des moyens d'envoi sans fil de données à l'au moins un dispositif de surveillance de la cargaison (2) et de réception sans fil de données en provenance de celui-ci, ainsi qu'une base de données, les moyens de contrôle de la cargaison (6) étant configurés pour stocker dans la base de données des données, en particulier des données qui ont été envoyées à l'au moins un dispositif de surveillance de la cargaison (2) ou reçues en provenance de celui-ci,
le signal de surveillance transmis sans fil par l'au moins un dispositif de localisation de la cargaison (1) en mode de surveillance étant adapté pour être reçu par l'au moins un dispositif de surveillance de la cargaison (2).

3. Système selon la revendication 2, **caractérisé par le fait que** l'au moins un dispositif de localisation de la cargaison (1) est configuré pour envoyer par intermittence des signaux de contrôle à l'au moins un dispositif de surveillance de la cargaison (2) en mode de surveillance et que l'au moins un dispositif de surveillance de la cargaison (2) est configuré pour envoyer par intermittence des signaux de confirmation à l'au moins un dispositif de localisation de la cargaison (1) en réponse aux signaux de contrôle dans lequel au moins un dispositif de localisation de cargaison (1) est configuré pour passer du mode de surveillance au mode de suivi lorsqu'il ne reçoit pas de signal d'accusé de réception dans un délai prédéfini après l'envoi d'un signal de vérification.

4. Système selon la revendication 2 ou 3, **caractérisé par la** présence d'au moins un dispositif d'alarme sans fil (3), configuré pour être relié au moyen de transport (5) des articles de cargaison, l'au moins un dispositif d'alarme sans fil (3) comprenant au moins une source d'énergie et des moyens de transmission de signaux d'alarme à l'au moins un dispositif de localisation de la cargaison (1) et étant adapté pour être activé manuellement par un utilisateur, dans lequel au moins un dispositif d'alarme sans fil (3) est configuré pour envoyer un signal d'alarme au moins un dispositif de localisation de cargaison (1) en réponse à une activation manuelle par un utilisateur, et dans lequel au moins un dispositif de localisation de cargaison (1) est configuré pour passer du mode surveillance au mode suivi en réponse à la réception d'un signal d'alarme provenant du au moins un dispositif d'alarme sans fil (3).

5. Système selon l'une des revendications 2 à 4, **caractérisé par le fait que** l'au moins un dispositif de localisation de cargaison (1) est configuré pour passer du mode suivi au mode surveillance en réponse à la réception d'un message d'activation de la surveillance envoyé via au moins un réseau GSM, un réseau LPWAN et un réseau radio, de préférence un réseau radio OUC, en particulier par les moyens de contrôle de cargaison (6).

6. Système selon l'une des revendications 2 à 5, **caractérisé par le fait que** les moyens de contrôle de cargaison (6) sont configurés pour envoyer des messages d'activation de suivi et/ou des messages d'activation de contrôle à l'au moins un dispositif de localisation de cargaison (1), qui comprennent un code d'activation unique de l'au moins un dispositif de localisation de cargaison (1).

7. Système selon l'une des revendications 2 à 6, **caractérisé par le fait que** l'au moins un dispositif de localisation de cargaison (1) comprend un moyen de déterminer sa distance spatiale par rapport au dispositif de surveillance de cargaison (2) et est configuré pour passer du mode de surveillance au mode de suivi lorsqu'une valeur donnée de distance spatiale est dépassée et/ou lorsqu'une valeur courante de distance spatiale est modifiée et/ou lorsqu'une transmission de signal de l'au moins un dispositif de surveillance de cargaison (2) à l'au moins un dispositif de localisation de cargaison (1) prend fin.

8. Système selon l'une des revendications 2 à 7, **caractérisé par le fait que** les moyens de transmission et de réception sans fil des signaux de l'au moins un dispositif de localisation de cargaison (1) comprennent une puce radio (13) configurée pour générer des signaux radio modulés et pour démoduler des signaux radio et/ou au moins une antenne (15) et/ou un amplificateur de puissance (14) et/ou **par le fait que** la source d'énergie de l'au moins un dispositif de localisation de cargaison (1) comprend une batterie primaire (17a), une batterie d'émission (17b) et un système de gestion de l'énergie de la batterie (18).

9. Système selon l'une des revendications 2 à 8, **caractérisé par le fait que** le module GSM (19) de l'au moins un dispositif de localisation de cargaison (1) comprend un modem radio GSM configuré pour être enregistré sur un réseau cellulaire.

10. Système selon l'une des revendications 2 à 9, **caractérisé par le fait que** l'au moins un dispositif de surveillance de cargaison (2) comprend un moyen de déterminer sa distance spatiale par rapport à l'au moins un dispositif de localisation de cargaison (1) et est configuré pour passer en mode d'alerte lorsqu'une valeur donnée de distance spatiale est dépassée et/ou lorsqu'une valeur courante de distance spatiale est modifiée.

11. Système selon l'une des revendications 2 à 10, **caractérisé par le fait que** l'au moins un dispositif de surveillance de cargaison (2) est configuré pour communiquer avec un certain nombre de dispositifs de localisation de cargaison (1) qui sont affectés à l'au moins un dispositif de surveillance de cargaison (2).

12. Système selon l'une des revendications 2 à 11, **caractérisé par le fait que** l'au moins un dispositif de surveillance de cargaison (2) comprend au moins un récepteur GPS (21) et/ou au moins un module GSM (22) et/ou au moins un module Bluetooth (24) et/ou au moins une antenne (23) et/ou au moins un contrôleur de concentrateur série (25), et/ou une unité de surveillance du dispositif de localisation des cargaisons par radiofréquence (27) avec une puce radio, un amplificateur de puissance radio et une unité centrale de traitement, et/ou **par le fait que** l'au moins un dispositif de surveillance des cargaisons (2) comprend un module LPWAN (28)

13. Système selon l'une des revendications 2 à 12, **caractérisé par le fait que** les moyens de contrôle de cargaison (6) comprennent un centre de contrôle de cargaison (9), configuré pour contrôler au moins un dispositif de supervision de cargaison (2) et/ou un serveur de gestion de cargaison (8), configuré pour conserver des bases de données contenant des informations sur au moins un dispositif de supervision de cargaison (2) et au moins un dispositif de localisation de cargaison (1), sur la date, l'heure et la position et/ou les moyens de contrôle de cargaison (6) sont configurés pour envoyer des informations à un client et recevoir des informations de celui-ci par l'intermédiaire d'un système d'information client (10) basé sur un logiciel, en particulier basé sur le web.

14. Système selon l'une des revendications 2 à 13, **caractérisé par la** présence de moyens de suivi (7), notamment de dispositifs de suivi fixes (11) et/ou mobiles (12), configurés pour suivre un signal radio de suivi transmis par au moins un dispositif de localisation de cargaison (1) en mode de suivi, les moyens de suivi (7) comprenant en particulier une unité de radiogoniométrie à fréquence radio configurée pour déterminer l'angle de relèvement du signal de suivi transmis par au moins un dispositif de localisation de cargaison (1) en mode de suivi, notamment par l'application d'une technologie de radiogoniométrie à fréquence radio basée sur le décalage Doppler.

15. Méthode de localisation et de récupération d'un article de fret perdu à l'aide d'un système selon l'une des revendications 2 à 14, le système comprenant des moyens de localisation (7), en particulier des dispositifs de localisation fixes (11) et/ou mobiles (12), dans lesquels au moins un dispositif de localisation de cargaison (1) fournit des coordonnées de manière intermittente, en particulier des coordonnées LAT/LONG, au moins lorsque le dispositif de localisation de cargaison (1) est en mode de localisation, en particulier des coordonnées LAT/LONG, au moins lorsque le dispositif de localisation de cargaison (1) est en mode de suivi, et transmet les coordonnées fournies par le module GPS (20a) aux moyens de contrôle du fret (6) qui fournissent alors les coordonnées aux moyens de suivi, qui les utilisent pour suivre et récupérer le dispositif de localisation de cargaison (1) au moins.
